# EUROPEAN PATENT APPLICATION

(11) **EP 4 597 738 A1**
(43) Date of publication of application: **06.08.2025**
(21) Application number: 23870811.9
(22) Date of filing: 26.09.2023
(51) Int. Cl.: H01M 50/588, H01M 50/593, H01M 50/209

(54) **BATTERY AND ELECTRICAL APPARATUS**

(30) Priority: 30.09.2022 CN 202222623234 U
(71) Applicant: Contemporary Amperex Technology (Hong Kong) Limited, Central (HK)
(72) Inventor: XU, Chenyi, Ningde, Fujian 352100 (CN); TANG, Yu, Ningde, Fujian 352100 (CN); ZHANG, Chenchen, Ningde, Fujian 352100 (CN); LI, Xing, Ningde, Fujian 352100 (CN); HUANG, Xiaoteng, Ningde, Fujian 352100 (CN)
(74) Representative: Ziebig Hengelhaupt Intellectual Property Attorneys Patentanwaltskanzlei PartGmbB
(86) International application number: PCT/CN2023/121518
(87) International publication number: WO 2024/067583

(57) **Abstract**

A battery (100) and an electrical device (200) are disclosed. The battery (100) includes a plurality of battery cells (101). At least two of the battery cells (101) are disposed opposite to each other. At least one electrode post (121) of the two battery cells (101) disposed opposite to each other is located on one side of each of two battery cells (101), where the one side of one battery cell is oriented toward the one side of the other battery cell. An insulation structure (3) is disposed between the two battery cells (101) disposed opposite to each other. At least a part of the insulation structure (3) is located between the electrode posts (121) of the two battery cells (101), the electrode posts being oriented toward each other.

## Description

### CROSS-REFERENCE TO RELATED APPLICATIONS

This application is based on and claims priority to Chinese Patent Application No. 202222623234.4, filed on September 30, 2022, which is incorporated herein by reference in its entirety.

### TECHNICAL FIELD

This application relates to the technical field of batteries, and in particular, to a battery and an electrical device.

### BACKGROUND

In the related art, a voltage difference exists between battery cells of a battery, and an electrical clearance between electrical connectors of the battery cells is excessively small. When the voltage difference reaches a breakdown voltage, a high-voltage sparking problem may occur.

### SUMMARY

Some embodiments of this application provide a battery and an electrical device to effectively improve the safety of the battery in use.

According to a first aspect, an embodiment of this application provides a battery. The battery includes a plurality of battery cells. At least two of the battery cells are disposed opposite to each other. At least one electrode post of the oppositely disposed two battery cells is located on one side of each of the two battery cells, where the one side of one battery cell is oriented toward the one side of the other battery cell. An insulation structure is disposed between the two oppositely disposed battery cells. At least a part of the insulation structure is located between the electrode posts of the two battery cells, the electrode posts being oriented toward each other.

In the above technical solution, an insulation structure is disposed between the two oppositely disposed battery cells, and at least a part of the insulation structure is located between the electrode posts of the two battery cells, the electrode posts being oriented toward each other. Therefore, among the two oppositely disposed battery cells, the electrode post of one battery cell is isolated from the electrode post of the other battery cell by the insulation structure. Under the condition that the voltage difference and distance between the two battery cells are constant, because the insulation structure is significantly less prone to be sparked over than the air, the insulation structure can properly solve the sparking problem caused by a high voltage between the battery cells, and effectively improve the safety of the battery in use. Moreover, the elimination of the sparking problem caused by a high voltage between the battery cells does not give rise to an increase in the distance between the battery cells, but rather shortens the distance between the battery cells, thereby making the overall structure of the battery compact.

In some embodiments, each of the battery cells is provided with a pressure relief structure. The pressure relief structure and the electrode post are located on different sides of the battery cell. Because the electrode post and the pressure relief structure of the battery cell are located on different sides of the battery cell, it is favorably ensured that a relatively large distance exists between the electrode post and the pressure relief structure of the battery cell, so as to effectively prevent the conductive particles and the like in the emissions from flowing to the electrode post of the battery cell and causing insulation failure, high-voltage sparking and other problems (the emissions are expelled by the battery cell through its own pressure relief structure in circumstances such as thermal runaway), and so as to ensure a sufficient creepage clearance between the conductive components in the battery and avoid the short-circuiting problem.

In some embodiments, the electrode posts of the battery cell are all located on the same side. The pressure relief structure and the electrode posts are located on two opposite sides of the battery cell. In this way, the distance between the pressure relief structure and the electrode posts of the battery cells is made to be relatively long, and the impact of thermal runaway on the electrical connection is smaller.

In some embodiments, the insulation structure includes at least one of an insulation adhesive, an insulation plate, or an insulation film. The insulation structure designed to include the insulation adhesive and/or insulation plate can produce a good electrical insulation effect, and is a simple in structure and easy to process and take shape.

In some embodiments, the battery includes a plurality of battery groups. The plurality of battery groups are arranged along a first direction. Each of the battery groups includes at least one battery row. The battery row includes a plurality of battery cells arranged along a second direction, and the second direction is perpendicular to the first direction. The layout in which the battery is formed of a plurality of arranged battery groups makes the battery cells of the battery arranged compactly.

In some embodiments, two adjacent battery groups in the first direction are disposed opposite to each other and spaced apart. An electrical connection structure is disposed on one side of each of at least a part of two adjacent battery groups in the first direction, where the one side of one of the two adjacent battery groups is oriented toward the one side of other battery group. The electrical connection structure includes the electrode post. The insulation structure is disposed between the two adjacent battery groups provided with the electrical connection structures on opposite sides in the first direction. At least a part of the insulation structure is located between the electrical connection structures of the two adjacent battery groups.

Because the insulation structure is located between the two adjacent battery groups, it is convenient to centrally dispose the insulation structures between a plurality of different battery cells, thereby facilitating centralized insulative protection between the electrode posts of a plurality of battery cells, and in turn, improving production efficiency. In addition, the electrical connection structure is disposed on one side of each of the two adjacent battery groups, where the one side of one of the two adjacent battery groups is oriented toward the one side of the other battery group; and the insulation structure is disposed between the two adjacent battery groups provided with the electrical connection structures on opposite sides. In this way, the insulation structure can not only implement insulative protection between the electrode posts of the battery cells, but also implement insulative protection for all electrical connection structures between the battery groups, thereby producing a stronger insulative protection effect, solving the high-voltage sparking problem more thoroughly, and further improving the safety of battery in use.

In some embodiments, the insulation structure includes an insulation adhesive. The insulation adhesive produces a good insulation effect and is easy to be applied between the battery groups.

In some embodiments, the insulation adhesive is a thermally conductive insulation adhesive. The thermally conductive insulation adhesive can play a role in cooling or heating the electrical connection structure while achieving an insulative protection effect.

In some embodiments, a projection of the electrical connection structure on a reference plane lies within a projection of the insulation adhesive on the reference plane, and the reference plane is a plane perpendicular to the first direction. In this way, the insulation adhesive can completely cover the electrical connection structure to implement comprehensive insulative protection.

In some embodiments, a projection of the insulation adhesive on a reference plane lies within a projection of the battery row on the reference plane, and the reference plane is a plane perpendicular to the first direction. In this way, on the basis of the insulation adhesive completely covering the electrical connection structure to implement comprehensive insulative protection, the amount of the insulation adhesive to be consumed can be reduced, the cost can be reduced, and the volume of the insulation adhesive can be reduced, thereby making the overall structure of the battery compact.

In some embodiments, a minimum thickness of the insulation adhesive is d, a maximum voltage difference between two adjacent battery groups in the first direction is U, a thickness of the insulation adhesive is a dimension of the insulation adhesive in the first direction, a resistance of the insulation adhesive is R, and the d, U, and R satisfy: U/(R × 0.1 × d) ≤ 44.5. In setting the minimum thickness of the insulation adhesive, with reference to the maximum voltage difference between the battery groups and the resistance of the insulation adhesive, the thickness of the insulation adhesive may be set to a value that reduces the thickness of the insulation adhesive but is enough for safety protection. Another approach is to set the distance between battery groups reasonably to make the overall structure of the battery compact and save the consumed material of the insulation adhesive while implementing safety protection.

In some embodiments, the battery includes an adhesive blocking structure. The adhesive blocking structure is disposed on two opposite sides of the insulation adhesive along the second direction. Due to the adhesive blocking structure disposed, when the insulation adhesive is poured as a filler between two adjacent battery groups by potting, uncured insulation adhesive can be prevented from flowing out from between the two adjacent battery groups.

In some embodiments, two opposite side faces of the battery row in the two adjacent battery groups along the second direction are a first side face and a second side face respectively. One of the adhesive blocking structures abuts or is connected to the first side face, and the other adhesive blocking structure abuts or is connected to the second side face. By abutting or connecting the adhesive blocking structures to the two opposite side faces of the battery row along the second direction, during the pouring of the adhesive between the battery groups, the uncured insulation adhesive between the battery groups can be better prevented from flowing out from between the battery groups on both sides along the second direction.

In some embodiments, the adhesive blocking structure includes an adhesive blocking portion and a support portion. The support portion is disposed on a bottom face of the adhesive blocking portion. The support portion is adapted to support a bottom plate of the battery. The adhesive blocking portion abuts or is connected to the first side face or the second side face. The adhesive blocking structure is supported against the bottom plate of the battery by the support portion, thereby improving the stability of the adhesive blocking structure.

In some embodiments, a horizontal cross-sectional area of the support portion is larger than a horizontal cross-sectional area of the adhesive blocking portion. The relatively large cross-sectional area of the bottom of the adhesive blocking structure can increase the contact area between the adhesive blocking structure and the bottom plate of the battery, thereby improving the stability of the adhesive blocking structure and preventing the adhesive blocking structure from tilting under the impact of uncured insulation adhesive in a process of pouring adhesive between the battery groups, where the tilting impairs the adhesive blocking effect.

In some embodiments, the insulation structure further includes an insulation plate, and an outer surface of the insulation plate is coated with the insulation adhesive. On the basis of disposing the insulation adhesive between the battery groups, an insulation plate is disposed to further improve the insulative protection effect. In addition, because the insulation adhesive overlays the outer surface of the insulation plate, the insulation plate can serve as a framework structure of the insulation adhesive, thereby increasing the structural strength of the insulation structure between the battery groups, and in turn, improving the overall structural strength of the battery.

In some embodiments, the insulation plate extends along the second direction. At least a part of the insulation adhesive is located on two opposite sides of the insulation plate along the first direction. By extending the insulation plate along the arrangement direction of the plurality of battery cells in a battery row, the plurality of oppositely disposed battery cells are effectively insulated from each other by the insulation adhesive and the insulation plate.

In some embodiments, two opposite end faces of the insulation plate along the second direction protrude beyond two opposite end faces of the insulation adhesive along the second direction respectively. In this way, in the arrangement direction of the plurality of battery cells in the battery row, the insulation plate can penetrate the insulation adhesive, so that the structural strength of each part of the insulation structure is increased, thereby making the overall structural strength of the insulation structure relatively uniform, and improving the overall insulative protection effect.

In some embodiments, the insulation plate extends along a straight line, a curve, or a polygonal line in the second direction. The insulation plate extending along a straight line is simple in structure and is easy to process and take shape. The insulation plate extending along a curve or a polygonal line is of higher structural strength, thereby making the overall structural strength of the insulation structure higher.

In some embodiments, a through-hole is formed in the insulation plate. The through-hole communicates, and is located in a space between, two opposite sides of the insulation plate along the first direction. In a process of forming the insulation adhesive between the battery groups by potting, the insulation adhesive located on the two opposite sides of the insulation plate along the first direction can flow toward each other through a through-hole on the insulation plate, so that the insulation adhesive located on the two opposite sides of the insulation plate along the first direction is more uniform.

In some embodiments, a plurality of through-holes are provided, and are spaced apart along an extension direction of the insulation plate. The through-holes on the insulation plate are plural, and are spaced apart along the extension direction of the insulation plate, so that the insulation adhesive located on the two opposite sides of the insulation plate along the first direction can be further made to flow toward each other through the plurality of through-holes on the insulation plate. In this way, the insulation adhesive on the two opposite sides of the insulation plate along the first direction can be uniformized everywhere along the second direction. Therefore, the insulation adhesive between the battery groups can be uniformized in every part during the potting, so that the overall structure of the cured insulation adhesive is uniform, and the overall insulative protection effect is stronger.

In some embodiments, the insulation plate includes a plurality of insulation sub-plates spaced apart along the second direction. At least a part of the insulation adhesive fills a clearance between two adjacent insulation sub-plates. The plurality of insulation sub-plates are spaced apart along the extension direction of the insulation adhesive, so that each part of the insulation adhesive in the length direction can be supported by the insulation sub-plates. In this way, the overall structural strength of the insulation structure is uniform and high, and the overall insulative protection effect is stronger.

In some embodiments, the insulation plate is positioned between two adjacent battery groups by a positioning structure. Before the insulation adhesive is formed between the adjacent battery groups by potting, the insulation plate may be positioned between the two adjacent battery groups by a positioning structure. In this way, during the potting, the insulation plate can remain stable at a preset position without displacement or tilting, so that the insulation structure formed by the cured insulation adhesive and the insulation plate can produce the designed structure.

In some embodiments, the positioning structure includes a positioning groove. A part of the insulation plate is inserted into the positioning groove. By inserting a part of the insulation plate into the positioning groove, the insulation plate can be positioned conveniently. The positioning structure is simple and easy to process and take shape.

In some embodiments, the battery further includes an adhesive blocking structure. The adhesive blocking structure is disposed on two opposite sides of the insulation adhesive along the second direction. The insulation plate extends along the second direction. At least a part of the insulation adhesive is located on two opposite sides of the insulation plate along the first direction. The positioning structure is disposed on one side of the adhesive blocking structure, the side being oriented toward the insulation adhesive. Due to the adhesive blocking structure disposed, when the insulation adhesive is poured as a filler between two adjacent battery groups by potting, uncured insulation adhesive can be prevented from flowing out from between the two adjacent battery groups. In addition, the positioning structure is disposed on the adhesive blocking structure, so that the positioning structure and the adhesive blocking structure are integrated into a whole, thereby simplifying the number of components. Moreover, the two ends of the insulation plate are positioned by the positioning structure on the adhesive blocking structure, so that the insulation plate is positioned reliably and conveniently.

In some embodiments, the positioning structure is formed as a positioning groove extending along a vertical direction. Two opposite ends of the insulation plate along the second direction are inserted into the positioning groove separately. The positioning structure disposed on the adhesive blocking structure is formed as a positioning groove extending along the vertical direction, thereby increasing the area of a fit between the insulation plate and the positioning structure, and improving the stability of positioning the insulation plate.

In some embodiments, the insulation plate is a mica board. The mica board is of high insulation performance and high structural strength, thereby achieving a high level of the overall insulation performance and structural strength of the insulation structure.

In some embodiments, the insulation structure includes an insulation plate. The insulation plate is formed as an insulating protection cover. The insulating protection cover overlays the electrical connection structure of at least one of two adjacent battery groups. The insulation plate is shaped in the form of an insulating protection cover, and overlays the electrical connection structure of at least one of the two adjacent battery groups, thereby dielectrically isolating the electrical connection structures of the two adjacent battery groups conveniently and effectively.

In some embodiments, the insulating protection cover includes a cover body and a connecting flange. The connecting flange is connected to an outer edge of the cover body. The cover body overlays the electrical connection structure of at least one of the two adjacent battery groups. The connecting flange is connected to an outer wall surface of the battery row. The insulating protection cover is connected to the outer wall surface of the battery row by the provided connecting flange, thereby facilitating the mounting and fixation of the insulating protection cover.

In some embodiments, surfaces of the two adjacent battery groups, the surfaces being oriented toward each other, are battery end faces. An inner wall of the cover body is provided with a reinforcing bulge. The reinforcing bulge abuts the battery end faces. By disposing the reinforcing bulge on the inner wall of the cover body and letting the reinforcing bulge abut the battery end faces, the structural strength of the insulating protection cover can be increased, and the stability of the overall structure can be improved.

In some embodiments, the insulating protection cover is connected to an outer wall surface of the battery row by double-sided tape. The insulating protection cover is connected and fixed to the outer wall surface of the battery row by the double-sided tape, so that the mounting and fixation of the insulating protection cover are convenient, simple, and easy to operate.

In some embodiments, surfaces of the two adjacent battery groups, the surfaces being oriented toward each other, are battery end faces. The insulating protection cover is connected to the battery end faces. Connecting the insulating protection cover to a less expansible surface of the battery cell can avoid or reduce severe deformation of the insulating protection cover caused by the expansion of the battery cell, thereby ensuring that the junction between the insulating protection cover and the battery cell remains stable and ensuring a long service life of the insulating protection cover.

In some embodiments, the insulating protection cover is an elastomer that is elastically deformable. When the battery cell expands, the insulating protection cover can deform along with the battery cell because the insulating protection cover itself is elastically deformable, so that the insulating protection cover can adapt to the expansion of the battery cell, thereby ensuring that the junction between the insulating protection cover and the battery cell remains stable and ensuring a long service life of the insulating protection cover.

In some embodiments, two insulating protection covers are disposed between the two adjacent battery groups. The two insulating protection covers overlay the electrical connection structures of the two adjacent battery groups respectively. In this way, an insulating protection cover is disposed on the electrical connection structure of each battery group, so that the two adjacent battery groups are dielectrically isolated by the two insulating protection covers to achieve a stronger insulative protection effect.

In some embodiments, the two insulating protection covers between the two adjacent battery groups are spaced apart in the first direction. In this way, when the battery cell expands, because a clearance is left between the two insulating protection covers between the two adjacent battery groups, even if the insulating protection covers are deformed when the battery cell expands, a deformation space is left for the insulating protection covers, thereby preventing the two insulating protection covers between the two adjacent battery groups from squeezing each other due to deformation, and in turn, ensuring a long service life of the insulating protection covers.

In some embodiments, the battery group includes two battery rows arranged along the first direction. The electrical connection structures of the two battery rows in the battery group are oriented away from each other. Pressure relief structures of the two battery rows in the battery group are oriented toward each other. A protection beam extending along the second direction is disposed between the two battery rows in the battery group. At least a part of the protection beam is located between the pressure relief structures of the two battery rows in the same battery group. By making the electrical connection structures of the two battery rows in the battery group oriented away from each other, all the electrical connection structures of the two adjacent battery groups can be positioned on one side of the two adjacent battery groups, where the one side of one battery group is oriented toward the one side of the other battery group, thereby facilitating the arrangement of the insulation structure. In this way, the insulation structures are centrally arranged between the two adjacent battery groups, thereby improving production efficiency while achieving a good insulative protection effect.

In addition, by making the pressure relief structures of the two battery rows in the battery group oriented toward each other, the pressure relief structure and the electrical connection structure of each battery cell can be positioned on the two opposite sides of the battery cell respectively. In this way, the impact of thermal runaway on the electrical connection structure is smaller. In addition, this arrangement prevents that the electrical connection structure of one of the two adjacent battery groups is disposed opposite to the pressure relief structure of the other of the two adjacent battery groups. In this way, the electrical connection structure of any battery group is protected against the impact of emissions expelled by the battery cells in other battery groups through the pressure relief structure, thereby ensuring the safety and reliability of battery in use. Moreover, a protection beam is disposed between the two adjacent battery rows in the same battery group, and at least a part of the protection beam is located between the pressure relief structures of the two battery rows in the same battery group. When thermal runaway occurs in the battery cell, the protection beam can block and buffer the emissions expelled by the battery cell through the pressure relief structure, thereby reducing the impact on the battery cells in the adjacent battery group caused by the emissions expelled by the battery cell through the pressure relief structure.

In some embodiments, the protection beam includes a heat exchange portion. The heat exchange portion is configured to exchange heat with the battery cells. The protection beam not only reduces the impact of the thermal runaway of the battery cell on the battery cells in the adjacent battery group, but also cools or heats the battery cell through the provided heat exchange portion, thereby ensuring that the battery can work stably at different ambient temperatures.

According to a second aspect, an embodiment of this application further provides an electrical device. The electrical device includes the battery disclosed above. The battery is configured to provide electrical energy for the electrical device.

Additional aspects and advantages of this application will be partly given in the following description, and a part thereof will become evident in the following description or will be learned in the practice of this application.

### BRIEF DESCRIPTION OF DRAWINGS

The above and/or additional aspects and advantages of this application will become evident and easily comprehensible through the description of some embodiments with reference with the drawings outlined below:
FIG. 1 is a schematic diagram of battery groups in a battery according to some embodiments of this application;
FIG. 2 is a schematic diagram of a partial structure of the battery group shown in FIG. 1;
FIG. 3 is a schematic diagram of a partial structure of a battery according to some embodiments of this application;
FIG. 4 is a schematic layout diagram of two adjacent battery groups in the battery shown in FIG. 3;
FIG. 5 is a side view of the two adjacent battery groups shown in FIG. 4;
FIG. 6 is an exploded view of a partial structure of the battery shown in FIG. 3;
FIG. 7 is a side view of a partial structure of the battery shown in FIG. 6;
FIG. 8 is a close-up view of a position A shown in FIG. 7;
FIG. 9 is a schematic diagram of a partial structure of a battery according to some other embodiments of this application;
FIG. 10 is a top view of a partial structure of the battery shown in FIG. 9;
FIG. 11 is a close-up view of a position B shown in FIG. 10;
FIG. 12 is an exploded view of a partial structure of the battery shown in FIG. 9;
FIG. 13 is a schematic diagram of a fit of an adhesive blocking structure to an insulation plate and a bottom plate in the battery shown in FIG. 9;
FIG. 14 is a close-up view of a position C shown in FIG. 13;
FIG. 15 is a schematic diagram of an adhesive blocking structure detached from an insulation plate in the battery shown in FIG. 9;
FIG. 16 is a close-up view of a position D shown in FIG. 15;
FIG. 17 is a schematic diagram of a partial structure of a battery according to still some other embodiments of this application;
FIG. 18 is a schematic layout diagram of two adjacent battery groups in the battery shown in FIG. 17;
FIG. 19 is a close-up view of a position E shown in FIG. 18;
FIG. 20 is a close-up view of a position F shown in FIG. 18;
FIG. 21 is a side view of two adjacent battery groups in the battery shown in FIG. 17;
FIG. 22 is a close-up view of a position G shown in FIG. 21; and
FIG. 23 is a schematic diagram of an electrical device according to some embodiments of this application.

List of reference numerals:
100. battery;
10. battery group; 11. battery row; 101. battery cell; 12. electrical connection structure; 121. electrode post; 122. connecting strap; 13. pressure relief structure; 14. first side face; 15. second side face; 16. battery end face; 21. protection beam; 211. heat exchange portion;
3. insulation structure; 31. insulation adhesive; 32. insulation plate; 33. insulating protection cover; 331. cover body; 332. connecting flange; 34. double-sided tape;
4. adhesive blocking structure; 41. support portion; 42. adhesive blocking portion; 43. positioning structure;
51. bottom plate; 52. top plate;
200. electrical device.

### DETAILED DESCRIPTION OF EMBODIMENTS

To make the objectives, technical solutions, and advantages of the embodiments of this application clearer, the following gives a clear description of the technical solutions in some embodiments of this application with reference to the drawings in some embodiments of this application. Evidently, the described embodiments are merely a part rather than all of the embodiments of this application. All other embodiments derived by a person of ordinary skill in the art based on the embodiments of this application without making any creative efforts still fall within the protection scope of this application.

Unless otherwise defined, all technical and scientific terms used herein have the same meanings as what is normally understood by a person skilled in the technical field of this application. The terms used in the specification of this application are merely intended to describe specific embodiments but not intended to limit this application. The terms "include" and "contain" and any variations thereof used in the specification, claims, and brief description of drawings of this application are intended as non-exclusive inclusion. The terms such as "first" and "second" used in the specification, claims, and brief description of drawings herein are intended to distinguish between different items, but are not intended to describe a specific sequence or order of precedence.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments.

In the description of this application, unless otherwise expressly specified and defined, the terms "mount", "concatenate", "connect", and "attach" are understood in a broad sense. For example, a "connection" may be a fixed connection, a detachable connection, or an integrated connection; or may be a direct connection or an indirect connection implemented through an intermediary; or may be internal communication between two components. A person of ordinary skill in the art is able to understand the specific meanings of the terms in this application according to specific situations.

The term "and/or" in this application indicates merely a relation for describing the related items, and represents three possible relationships. For example, "A and/or B" may represent the following three circumstances: A alone, both A and B, and B alone. In addition, the character "/" herein generally indicates an "or" relationship between the item preceding the character and the item following the character.

In some embodiments of this application, the same reference numeral denotes the same component. For brevity, detailed descriptions of the same component are omitted in a different embodiment. Understandably, dimensions such as thickness, length, and width of various components in some embodiments of this application shown in the drawings, and dimensions such as overall thickness, length, and width of an integrated device are merely illustrative descriptions, but do not constitute any limitation on this application.

"A plurality of" referred to herein means two or more (including two).

In this application, a battery 100 means a unitary physical module that includes one or more battery cells 101 to provide a higher voltage and capacity. For example, the battery 100 referred to herein may include a battery module, a battery pack, and the like. A type of battery 100 may include a box configured to package one or more battery cells 101 or a plurality of battery modules. The box may include a top plate 52 and a bottom plate 51. The box prevents liquid or other foreign matters from affecting the charging or discharging of the battery cell 101. Definitely, some types of batteries 100 may include no box and are directly disposed in a battery compartment of the electrical device 200.

In this application, a battery cell 101 may include a lithium-ion secondary battery, a lithium-ion primary battery, a lithium-sulfur battery, a sodium-lithium-ion battery, a sodium-ion battery, a magnesium-ion battery, or the like, without being limited in embodiments of this application. The battery cell 101 may be in a cylindrical shape, a flat shape, a cuboidal shape, or other shapes, without being limited herein. Depending on the form of packaging, the battery cell 101 is typically classed into three types: cylindrical cell, prismatic cell, and pouch cell. The type of the battery cell is not limited herein.

For example, a battery cell 101 may include a shell, an electrode assembly, and an electrolyte solution. The shell is configured to accommodate the electrode assembly and the electrolyte solution. The electrode assembly includes a positive electrode plate, a negative electrode plate, and a separator. The battery cell 101 works primarily by shuttling metal ions between the positive electrode plate and the negative electrode plate. The positive electrode plate includes a positive current collector and a positive active material layer. A surface of the positive current collector is coated with the positive active material layer. Of the positive current collector, a part uncoated with the positive active material layer protrudes from a part coated with the positive active material layer. The part, uncoated with the positive active material layer, of the positive current collector, serves as a positive tab. Using a lithium-ion battery as an example, the positive current collector may be made of aluminum, and a positive active material may be lithium cobalt oxide, lithium iron phosphate, ternary lithium, lithium manganese oxide, or the like.

The negative electrode plate includes a negative current collector and a negative active material layer. A surface of the negative current collector is coated with the negative active material layer. Of the negative current collector, a part uncoated with the negative active material layer protrudes from a part coated with the negative active material layer, and the part uncoated with the negative active material layer serves as a negative tab. The negative current collector may be made of copper, and a negative active material may be carbon, silicon, or the like. To prevent a large electrical current from tripping the circuit, a plurality of positive tabs are stacked together, and a plurality of negative tabs are stacked together.

The separator may be made of a material such as PP (polypropylene, polypropylene) or PE (polyethylene, polyethylene). In addition, the electrode assembly may be of a jelly-roll type structure or a stacked type structure, without being limited herein.

On the battery cell 101, an electrode post 121 or the like may be disposed and connected to a tab. In addition, a pressure relief structure 13 is typically disposed on the battery cell 101. When the internal pressure of the battery cell 101 is excessively high (for example, in a case of thermal runaway), the pressure relief structure 13 is configured to release the internal substances (for example, gas, liquid, and particulate matters) of the battery cell 101 to reduce the internal pressure of the battery cell 101 and prevent the battery cell 101 from being pressurized much quickly. The quick pressurization may lead to danger and accidents such as explosion of the battery cell 101. For example, the pressure relief structure 13 may be an explosion-proof valve, a burst disc, or the like.

In the related art, a battery includes a plurality of battery cells. To make the plurality of battery cells arranged more compactly and for other reasons, at least some of the battery cells are disposed opposite to each other, and the electrode post of each of the two oppositely disposed battery cells is positioned on one side of the battery cell, where the one side of one battery cell is oriented toward the one side of the other battery cell. Subsequently, because the electrode posts are conductive structures, in order to make the battery cells arranged compactly, the distance between the battery cells is relatively small, thereby resulting in a small electrical clearance between the electrode post of one battery cell and the electrode post of another battery cell. When the voltage difference between the battery cells is relatively large, the voltage is prone to spark over the air between the battery cells to cause high-voltage sparking, thereby reducing the safety of the battery in use.

In order to avoid the high-voltage sparking problem between battery cells, a conventional approach is to increase the electrical clearance by increasing the distance between the battery cells. However, the applicant hereof finds that this approach significantly reduces the energy density of the battery. In other words, when the battery capacity is constant, the volume of the battery increases significantly. This approach solves the high-voltage sparking problem, but gives rise to a new problem.

In view of the above situation, through in-depth research, the applicant hereof discloses a battery 100. The battery includes a plurality of battery cells 101. At least two of the battery cells 101 are disposed opposite to each other. At least one electrode post 121 of the two battery cells 101 disposed opposite to each other is located on one side of each of two battery cells 101, where the one side of one battery cell is oriented toward the one side of the other battery cell. An insulation structure 3 is disposed between the two battery cells 101 with the electrode posts 121 located on opposite sides. At least a part of the insulation structure 3 is located between the electrode posts 121 of the two battery cells 101.

In the battery 100 of this structure, an insulation structure 3 is disposed between the two battery cells 101 with the electrode posts 121 located on opposite sides. Under the condition that the voltage difference and distance between the two battery cells 101 are constant, because the insulation structure 3 is significantly less prone to be sparked over than the air, the insulation structure can properly solve the sparking problem caused by a high voltage between the battery cells 101, and effectively improve the safety of the battery 100 in use. Moreover, the elimination of the sparking problem caused by a high voltage between the battery cells 101 does not give rise to an increase in the distance between the battery cells 101, but rather shortens the distance between the battery cells 101, thereby making the overall structure of the battery 100 compact.

The battery 100 disclosed herein is applicable to, but not limited to use in, electrical devices 200 such as a vehicle, watercraft, or aircraft. A power supply system of the electrical devices 200 may be formed by using the battery 100 disclosed herein or the like, so as to ensure the safety and reliability of the electrical device 200 in use.

For example, the electrical device 200 disclosed herein may be, but is not limited to, a vehicle, a mobile phone, a tablet, a laptop computer, a ship, a spacecraft, an electric toy, an electric tool, or the like. The vehicle may be an oil-fueled vehicle, a natural gas vehicle, a new energy vehicle, or a rail vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, such as a game console, an electric car toy, an electric ship toy, an electric airplane toy, and the like. The power tool includes an electrical metal cutting tool, an electrical grinding tool, an electrical assembling tool, and a power tool for use in railways. Examples of the power tool are an electrical drill, an electrical grinder, an electrical wrench, an electrical screwdriver, an electrical hammer, an electrical impact drill, a concrete vibrator, an electrical planer, and the like.

The following describes in detail a battery 100 according to an embodiment of this application with reference to drawings.

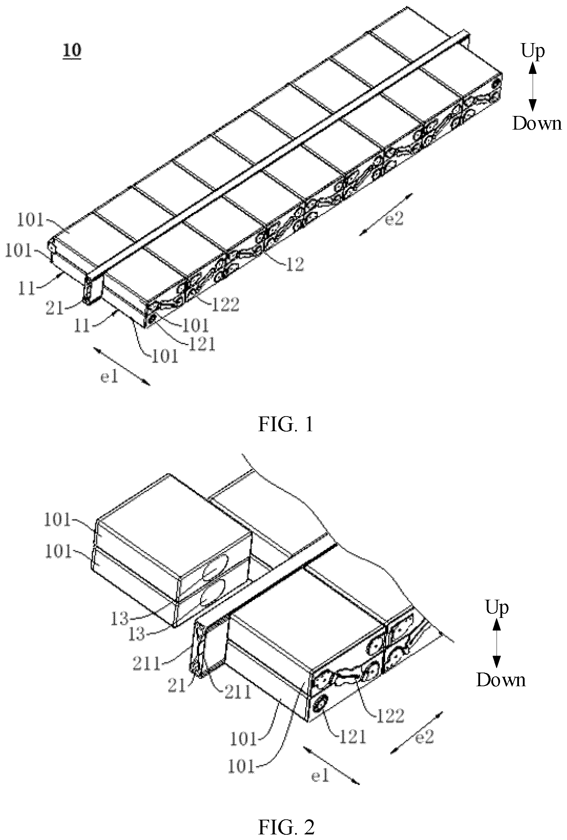

As shown in FIG. 1 to FIG. 3, an embodiment of this application provides a battery 100. The battery includes a plurality of battery cells 101. At least two of the battery cells 101 are disposed opposite to each other. At least one electrode post 121 of the oppositely disposed two battery cells 101 is located on one side of each of the two battery cells 101, where the one side of one battery cell is oriented toward the one side of the other battery cell. An insulation structure 3 is disposed between the two oppositely disposed battery cells 101. At least a part of the insulation structure 3 is located between the electrode posts 121 of the two battery cells 101.

"At least two of the battery cells 101 are disposed opposite to each other" means: (i) two of the battery cells 101 (a pair of battery cells 101) are disposed opposite to each other; or (ii) a plurality of pairs of battery cells 101 are disposed opposite to each other; or (iii) all battery cells 101 are arranged in an oppositely disposed manner.

"At least one electrode post 121 of a battery cell 101" means: (i) one electrode post 121 (a positive electrode post or a negative electrode post) of the battery cell 101; or (ii) two electrode posts 121 (both a positive electrode post and a negative electrode post) of the battery cell 101.

"At least one electrode post 121 of the oppositely disposed two battery cells 101 is located on one side of each of the two battery cells 101, where the one side of one battery cell is oriented toward the one side of the other battery cell" is explained as follows: for example, among two oppositely disposed battery cells 101, one is a first battery cell 101 and the other is a second battery cell 101; at least one electrode post 121 of the first battery cell 101 is located on one side of the first battery cell 101, the side being oriented toward the second battery cell 101; and at least one electrode post 121 of the second battery cell 101 is located on one side of the second battery cell 101, the side being oriented toward the first battery cell 101.

"At least a part of the insulation structure 3 is located between the electrode posts 121 of the two battery cells 101, with the electrode posts oriented toward each other" means: a part of the insulation structure 3 is located between the electrode posts 121 of the two battery cells 101, with the electrode posts oriented toward each other, and the remaining part of the insulation structure 3 is located between the remaining structure of the two battery cells 101 other than the electrode posts 121; or, "at least a part of the insulation structure 3 is located between the electrode posts 121 of the two battery cells 101, with the electrode posts oriented toward each other" means: the entire insulation structure 3 is located between the electrode posts 121 of the two battery cells 101, with the electrode posts oriented toward each other. In short, the insulation structure 3 disposed between the two oppositely disposed battery cells 101 at least isolates the electrode posts 121 of the two battery cells 101.

The insulation structure 3 is disposed between the two oppositely disposed battery cells 101, and at least a part of the insulation structure 3 is located between the electrode posts 121 of the two battery cells 101, with the electrode posts oriented toward each other. Therefore, among the two battery cells 101 with the electrode posts 121 located on opposite sides, the electrode post 121 of one battery cell is isolated from the electrode post of the other battery cell by the insulation structure 3. Under the condition that the voltage difference and distance between the two battery cells 101 are constant, because the insulation structure 3 is significantly less prone to be sparked over than the air, the insulation structure can properly solve the sparking problem caused by a high voltage between the battery cells 101, and effectively improve the safety of the battery 100 in use. Moreover, the elimination of the sparking problem caused by a high voltage between the battery cells 101 does not give rise to an increase in the distance between the battery cells 101, but rather shortens the distance between the battery cells 101, thereby making the overall structure of the battery 100 compact.

In some embodiments, referring to FIG. 2, each of the battery cells 101 is provided with a pressure relief structure 13. The pressure relief structure 13 and the electrode post 121 of the battery cell 101 are located on different sides of the battery cell 101.

Because the electrode post 121 and the pressure relief structure 13 of the battery cell 101 are located on different sides of the battery cell 101, it is favorably ensured that a relatively large distance exists between the electrode post 121 and the pressure relief structure 13 of the battery cell 101, so as to effectively prevent the conductive particles and the like in the emissions from flowing to the electrode post 121 of the battery cell 101 and causing insulation failure, high-voltage sparking and other problems (the emissions are expelled by the battery cell 101 through its own pressure relief structure 13 in circumstances such as thermal runaway), and so as to ensure a sufficient creepage clearance between the conductive components in the battery 100 and avoid the short-circuiting problem.

In some embodiments, referring to FIG. 2, the electrode posts 121 of the battery cell 101 are all located on the same side. The pressure relief structure 13 and the electrode post 121 are located on two opposite sides of the battery cell 101.

"The electrode posts 121 of the battery cell 101 are all located on the same side" means that both electrode posts 121 (a positive electrode post and a negative electrode post) of the battery cell 101 are located on the same side of the battery cell 101.

In this way, the distance between the pressure relief structure 13 and the electrode posts 121 of the battery cells 101 is made to be relatively long, and the impact of thermal runaway on the electrical connection is smaller.

In some embodiments, the insulation structure 3 includes at least one of an insulation adhesive 31, an insulation plate 32, or an insulation film.

"The insulation structure 3 includes at least one of an insulation adhesive 31, an insulation plate 32, or an insulation film" means: (i) the insulation structure 3 includes one of the insulation adhesive 31, the insulation plate 32, or the insulation film; or (ii) the insulation structure 3 includes two of the insulation adhesive 31, the insulation plate 32, or the insulation film; or (iii) the insulation structure 3 includes the insulation adhesive 31, the insulation plate 32, and the insulation film.

"The insulation structure 3 includes one of the insulation adhesive 31, the insulation plate 32, or the insulation film" means: (i) the insulation structure 3 includes the insulation adhesive 31; or (ii) the insulation structure 3 includes the insulation plate 32; or (iii) the insulation structure 3 includes the insulation film.

"The insulation structure 3 includes two of the insulation adhesive 31, the insulation plate 32, or the insulation film" means: (i) the insulation structure 3 includes the insulation adhesive 31 and the insulation plate 32; or (ii) the insulation structure 3 includes the insulation adhesive 31 and the insulation film; or (iii) the insulation structure 3 includes the insulation plate 32 and the insulation film.

Several examples of the insulation structure 3 are described below:
Example 1: The insulation structure 3 includes an insulation adhesive 31. Before the insulation adhesive 31 is disposed between two battery cells 101 with the electrode posts 121 disposed opposite to each other, the insulation adhesive 31 is a semi-fluid or a fluid. The insulation adhesive 31 may be poured, by a potting process, as a filler between the two battery cells 101 with the electrode posts 121 disposed opposite to each other. During the potting, at least the insulation adhesive 31 is ensured to overlay the outer surface of the electrode posts 121 of the battery cell 101. After completion of the potting, the insulation adhesive 31 applied as a filler between the two battery cells 101 with the electrode posts 121 disposed opposite to each other is cured. In this way, the electrode posts 121 of the two battery cells 101 with the electrode posts 121 disposed opposite to each other can be isolated by the insulation adhesive 31.
Example 2: The insulation structure 3 includes an insulation plate 32. Before the insulation plate 32 is disposed between the two battery cells 101 with the electrode posts 121 disposed opposite to each other, the insulation plate 32 is solid. Definitely, after the insulation plate 32 is disposed between the two battery cells 101 with the electrode posts 121 disposed opposite to each other, the insulation plate is still solid. The insulation plate 32 includes, but is not limited to, a flat plate structure. Alternatively, the insulation plate 32 may be a structure with a curved surface. Alternatively, the insulation plate 32 may be bent or processed into different shapes. For example, the insulation plate 32 may be formed into a cover structure.
Example 3: The insulation structure 3 includes an insulation plate 32 and an insulation adhesive 31. The insulation adhesive 31 may cover a part of the outer surface of the insulation plate 32 so that the insulation plate 32 and the insulation adhesive 31 form an integral insulation structure 3. The insulation plate 32 may serve as a framework structure of the insulation adhesive 31 to increase the structural strength, and the insulation plate 32 and the insulation adhesive 31 coordinate with each other to achieve the effect of double insulating protection.

The insulation structure 3 designed to include at least one of the insulation adhesive 31, the insulation plate 32, or the insulation film can produce a good electrical insulation effect, and is a simple in structure and easy to process and take shape.

In some embodiments, referring to FIG. 1 to FIG. 3, the battery includes a plurality of battery groups 10. The plurality of battery groups 10 are arranged along a first direction (the e1 direction shown in the drawings). The battery group 10 may include at least one battery row 11. The battery row 11 may include a plurality of battery cells 101 arranged along a second direction (the e2 direction shown in the drawings). The second direction is perpendicular to the first direction.

In a case that the plurality of battery groups 10 are arranged along the first direction (the e1 direction shown in the drawings), two adjacent battery groups 10 in the first direction may be spaced apart.

"The battery group 10 may include at least one battery row 11" means that the battery group 10 includes one battery row 11 or the battery group 10 includes a plurality of battery rows 11. When the battery group 10 includes a plurality of battery rows 11, the plurality of battery rows 11 in the same battery group 10 are arranged along the first direction.

Optionally, the plurality of battery cells 101 in the same row may be arranged in a single-layer structure, or in an upper-and-lower multi-layer (for example, two-layer) structure.

The first direction and the second direction may both be directions parallel to the horizontal direction.

The layout in which the battery 100 is formed of a plurality of arranged battery groups 10 makes the battery cells 101 of the battery 100 arranged compactly.

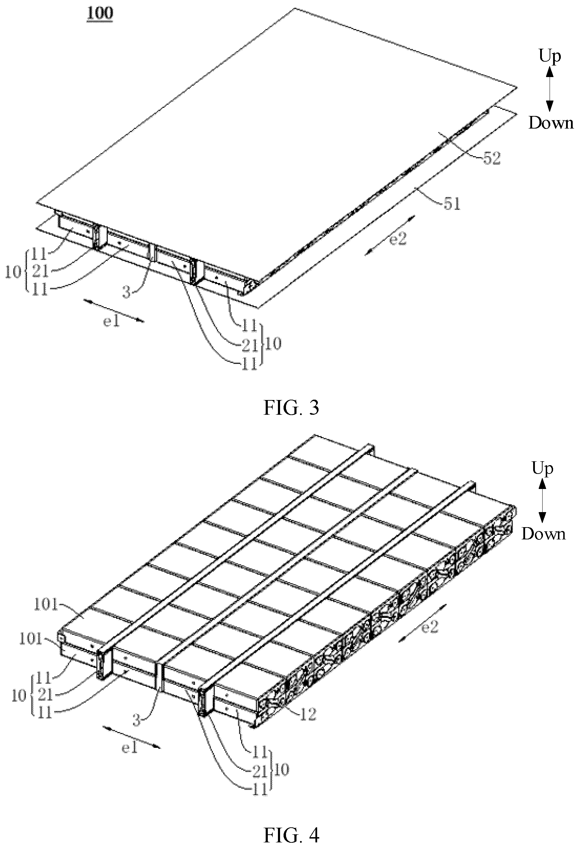

In some embodiments, referring to FIG. 4, two adjacent battery groups 10 in the first direction are disposed opposite to each other and spaced apart. An electrical connection structure 12 is disposed on one side of each of at least a part of two adjacent battery groups 10 in the first direction, where the one side of one of the two adjacent battery groups is oriented toward the one side of other battery group. The electrical connection structure 12 includes the electrode post 121. An insulation structure 3 is disposed between the two adjacent battery groups 10 provided with the electrical connection structures 12 on opposite sides in the first direction. At least a part of the insulation structure 3 is located between the electrical connection structures 12 of the two adjacent battery groups 10.

The electrical connection structure 12 may include an electrode post 121, or the electrical connection structure 12 may include an electrode post 121 and a connecting strap 122. The connecting strap 122 is a conductive strap. The connecting strap 122 may be configured to electrically connect the electrode posts 121 of two adjacent battery cells 101 in the same battery row 11 to achieve series connection and/or parallel connection between a plurality of battery cells 101 in the same row.

"At least a part of the insulation structure 3 is located between the electrical connection structures 12 of the two adjacent battery groups 10" means: a part of the insulation structure 3 is located between the electrical connection structures 12 of the two adjacent battery groups 10, and the remaining part of the insulation structure 3 is located between the remaining structure of the two adjacent battery groups 10 other than the electrical connection structures 12; or, the entire insulation structure 3 is located between the electrical connection structures 12 of the two adjacent battery groups 10. In short, the insulation structure 3 disposed between the two adjacent battery groups 10 provided with the electrical connection structures 12 on opposite sides at least isolates the electrical connection structures 12 of the two adjacent battery groups 10.

When the electrical connection structure 12 includes an electrode post 121, the insulation structure 3 disposed between the two adjacent battery groups 10 provided with the electrical connection structures 12 on opposite sides at least isolates the electrode posts 121 of the two adjacent battery groups 10.

For example, among the two adjacent battery groups 10, one is a first battery group 10, and the other is a second battery group 10; a battery cell 101 in a battery row 11 adjacent to the second battery group 10 in the first battery group 10 is a first battery cell 101, and a battery cell 101 in a battery row 11 adjacent to the first battery group 10 in the second battery group 10 is a second battery cell 101; and the first battery cell 101 and the second battery cell 101 of the two adjacent battery groups 10 are disposed opposite to each other and spaced apart. The electrode posts 121 of each first battery cell 101 in the first battery group 10 are located on one side of the first battery cell 101, the side being oriented toward the second battery group 10. The electrode posts 121 of each second battery cell 101 in the second battery group 10 are located on one side of the second battery cell 101, the side being oriented toward the first battery group 10.

When the electrical connection structure 12 includes an electrode post 121 and a connecting strap 122, the insulation structure 3 disposed between the two adjacent battery groups 10 provided with the electrical connection structures 12 on opposite sides at least isolates the electrode post 121 and the connecting strap 122 of the two adjacent battery groups 10.

For example, among the two adjacent battery groups 10, one is a first battery group 10, and the other is a second battery group 10; a battery cell 101 in a battery row 11 adjacent to the second battery group 10 in the first battery group 10 is a first battery cell 101, and a battery cell 101 in a battery row 11 adjacent to the first battery group 10 in the second battery group 10 is a second battery cell 101; and the first battery cell 101 and the second battery cell 101 of the two adjacent battery groups 10 are disposed opposite to each other and spaced apart. The electrode posts 121 of each first battery cell 101 in the first battery group 10 are located on one side of the first battery cell 101, the side being oriented toward the second battery group 10. The electrical connection structure 12 of the battery row 11 formed of a plurality of first battery cells 101 is located on one side of the battery row 11, the side being oriented toward the second battery group 10. The electrode posts 121 of each second battery cell 101 in the second battery group 10 are located on one side of the second battery cell 101, the side being oriented toward the first battery group 10. The electrical connection structure 12 of the battery row 11 formed of a plurality of second battery cells 101 is located on one side of the battery row 11, the side being oriented toward the first battery group 10.

The battery cells 101 adjacent to each other in two adjacent battery groups 10 are spaced apart. The electrode posts 121 of the battery cells 101 adjacent to each other in the two adjacent battery groups 10 are located on one side of each of the two battery groups 10, where the one side of one battery group is oriented toward the one side of the other battery group. The insulation structure 3 is located between the two adjacent battery groups 10. The insulation structure 3 isolates the electrode posts 121 of the two adjacent battery groups 10.

Because the insulation structure 3 is located between the two adjacent battery groups 10, the insulation structure 3 disposed between the two adjacent battery groups 10 can isolate the electrode post 121 of one battery group from the electrode post of the other battery group in the two adj acent battery groups 10, where the electrode post of one battery group is oriented toward the electrode post of the other battery group. This arrangement of insulation structures 3 makes it convenient to centrally dispose the insulation structures 3 between a plurality of different battery cells 101, thereby facilitating centralized insulative protection between the electrode posts 121 of a plurality of battery cells 101, and in turn, improving production efficiency.

In addition, the electrical connection structure 12 is disposed on one side of each of the two adj acent battery groups 10, where the one side of one of the two adjacent battery groups is oriented toward the one side of the other battery group; and the insulation structure 3 is disposed between the two adjacent battery groups 10 provided with the electrical connection structures 12 on opposite sides. In this way, the insulation structure 3 can not only implement insulative protection between the electrode posts 121 of the battery cells 101, but also implement insulative protection for all electrical connection structures 12 between the battery groups 10, thereby producing a stronger insulative protection effect, solving the high-voltage sparking problem more thoroughly, and further improving the safety of battery 100 in use.

In some embodiments, referring to FIG. 1 to FIG. 2, the battery group 10 includes two battery rows 11 arranged along the first direction. The electrical connection structures 12 of the two battery rows 11 in the battery group 10 are oriented away from each other, and the pressure relief structures 13 of the two battery rows 11 in the battery group 10 are oriented toward each other. A protection beam 21 extending along the second direction is disposed between the two battery rows 11 in the battery group 10. At least a part of the protection beam 21 is located between the pressure relief structures 13 of the two battery rows 11 in the same battery group 10.

"The electrical connection structures 12 of the two battery rows 11 in the battery group 10 are oriented away from each other, and the pressure relief structures 13 of the two battery rows 11 in the battery group 10 are oriented toward each other" may be exemplarily explained as follows: the two battery rows 11 in the battery group 10 are a first battery row 11 and a second battery row 11 respectively; the electrical connection structure 12 of the first battery row 11 is located on one side of the first battery row 11 away from the second battery row 11, and the electrical connection structure 12 of the second battery row 11 is located on one side of the second battery row 11 away from the first battery row 11; the pressure relief structure 13 of the first battery row 11 is located on one side of the first battery row 11 toward the second battery row 11, and the pressure relief structure 13 of the second battery row 11 is located on one side of the second battery row 11 toward the first battery row 11.

"At least a part of the protection beam 21 is located between the pressure relief structures 13 of the two battery rows 11 in the same battery group 10" means: (i) a part of the protection beam 21 is located between the pressure relief structures 13 of the two battery rows 11 in the same battery group 10, and the remaining part of the protection beam 21 is located between the remaining part of the two battery rows 11 in the same battery group 10 other than the pressure relief structures 13; or (ii) the protection beam 21 is located between the pressure relief structures 13 of the two battery rows 11 in the same battery group 10.

By making the electrical connection structures 12 of the two battery rows 11 in the battery group 10 oriented away from each other, all the electrical connection structures 12 of the two adjacent battery groups 10 can be positioned on one side of the two adjacent battery groups 10, where the one side of one battery group is oriented toward the one side of the other battery group, thereby facilitating the arrangement of the insulation structure 3. In this way, the insulation structures 3 are centrally arranged between the two adjacent battery groups 10, thereby improving production efficiency while achieving a good insulative protection effect.

In addition, by making the pressure relief structures 13 of the two battery rows 11 in the battery group 10 oriented toward each other, the pressure relief structure 13 and the electrical connection structure 12 of each battery cell 101 can be positioned on the two opposite sides of the battery cell 101 respectively. In this way, the impact of thermal runaway on the electrical connection structure 12 is smaller. In addition, this arrangement prevents that the electrical connection structure 12 of one of the two adjacent battery groups 10 is disposed opposite to the pressure relief structure 13 of the other of the two adjacent battery groups 10. In this way, the electrical connection structure 12 of any battery group 10 is protected against the impact of emissions expelled by the battery cells 101 in other battery groups 10 through the pressure relief structure 13, thereby ensuring the safety and reliability of battery 100 in use.

Moreover, a protection beam 21 is disposed between the two adjacent battery rows 11 in the same battery group 10, and at least a part of the protection beam 21 is located between the pressure relief structures 13 of the two battery rows 11 in the same battery group 10. When thermal runaway occurs in the battery cell 101, the protection beam 21 can block and buffer the emissions expelled by the battery cell 101 through the pressure relief structure 13, thereby reducing the impact on the battery cells 101 in the adjacent battery group 10 caused by the emissions expelled by the battery cell 101 through the pressure relief structure 13.

In some embodiments, referring to FIG. 1 to FIG. 2, the protection beam 21 includes a heat exchange portion 211. The heat exchange portion 211 is configured to exchange heat with the battery cells 101. The heat exchange portion 211 may constitute a part of a thermal management structure of the battery 100.

Optionally, a heat exchange channel may be provided in the heat exchange portion 211. The heat exchange channel is available for a heat exchange medium to flow through. The heat exchange medium is a fluid. For example, the heat exchange medium may be a liquid or a gas. When the heat exchange medium is a liquid, the heat exchange medium is optionally water. The heat exchange medium flows through the heat exchange channel in the heat exchange portion 211, thereby carrying away the heat of the battery cell 101 or heating the battery cell 101.

The protection beam 21 not only reduces the impact of the thermal runaway of the battery cell 101 on the battery cells 101 in the adjacent battery group 10, but also cools or heats the battery cell 101 through the provided heat exchange portion 211, thereby ensuring that the battery 100 can work stably at different ambient temperatures.

In some embodiments, referring to FIG. 3 to FIG. 5, the insulation structure 3 includes an insulation adhesive 31.

It is hereby explained that, before the insulation adhesive 31 is disposed between two battery cells 101 with the electrode posts 121 disposed opposite to each other, the insulation adhesive 31 is a semi-fluid or a fluid. The insulation adhesive 31 may be poured, by a potting process, as a filler between the two battery cells 101 with the electrode posts 121 disposed opposite to each other.

During the potting, at least the insulation adhesive 31 is ensured to overlay the outer surface of the electrical connection structure 12. After completion of the potting, the insulation adhesive 31 applied as a filler between the two battery cells 101 with the electrode posts 121 disposed opposite to each other is cured. In this way, the electrical connection structures 12 of the two adjacent battery groups 10 can be isolated by the insulation adhesive 31. The insulation adhesive 31 produces a good insulation effect and is easy to be applied between the battery groups 10.

In some embodiments, the insulation adhesive 31 may be a thermally conductive insulation adhesive. The thermally conductive insulation adhesive possesses good insulation properties and high thermal conductivity. Therefore, the insulation adhesive 31 not only serves the insulative protection function, but also cools or heats the electrical connection structure 12 because the insulation adhesive 31 overlays the outer surface of the electrical connection structure 12.

In a case that the insulation adhesive 31 cools the electrical connection structure 12, the insulation adhesive 31 may directly dissipate the heat generated by the electrical connection structure 12, or the insulation adhesive 31 may dissipate, through a box of the battery 100, the heat generated by the electrical connection structure 12, or the insulation adhesive 31 may dissipate, through a thermal management structure of the battery 100, the heat generated by the electrical connection structure 12. In a case that the insulation adhesive 31 heats the electrical connection structure 12, the heat may be transferred to the insulation adhesive 31 through a thermal conductor, and then the insulation adhesive 31 transfers the heat to the electrical connection structure 12, thereby heating the electrical connection structure 12.

The insulation adhesive 31 may overlay not only the electrical connection structure 12 but also other parts of the battery cell 101. For example, when surfaces of two adjacent battery groups 10, the surfaces being oriented toward each other, are battery end faces 16, the insulation adhesive 31 may further overlay the battery end faces 16. When the insulation adhesive 31 is a thermally conductive insulation adhesive, the insulation adhesive 31 can not only cool or heat the electrical connection structure 12, but also cool or heat the main body of the battery cell 101 by thermally conductive contact with the battery end faces 16.

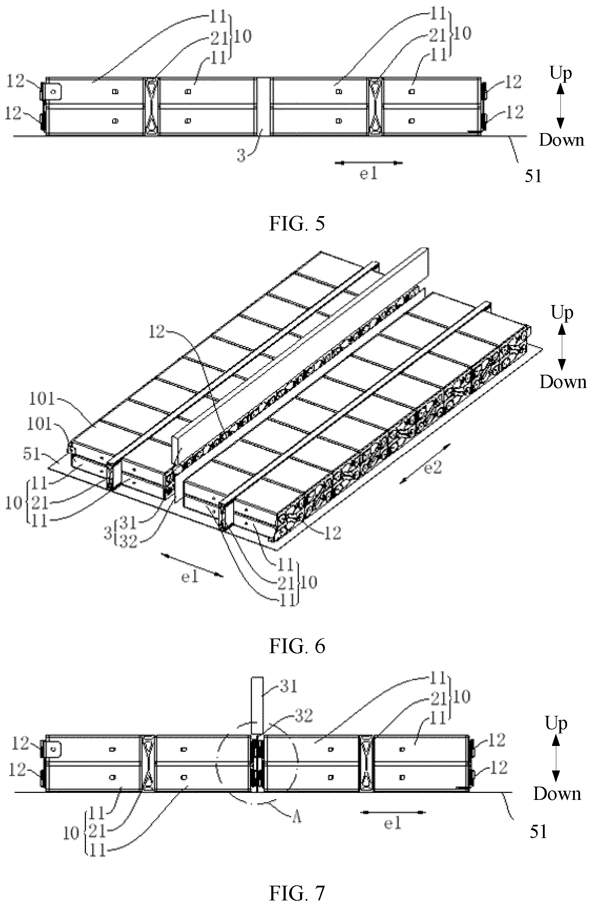

In some embodiments, referring to FIG. 5, a projection of the electrical connection structure 12 on a reference plane lies within a projection of the corresponding insulation adhesive 31 on the reference plane, and the reference plane is a plane perpendicular to the first direction. In this way, the insulation adhesive 31 can completely cover the electrical connection structure 12 to implement comprehensive insulative protection.

In some embodiments, referring to FIG. 5, a projection of the insulation adhesive 31 on a reference plane lies within a projection of the corresponding battery row 11 on the reference plane, and the reference plane is a plane perpendicular to the first direction. In this way, on the basis of the insulation adhesive 31 completely covering the electrical connection structure 12 to implement comprehensive insulative protection, the amount of the insulation adhesive 31 to be consumed can be reduced, the cost can be reduced, and the volume of the insulation adhesive 31 can be reduced, thereby making the overall structure of the battery 100 compact.

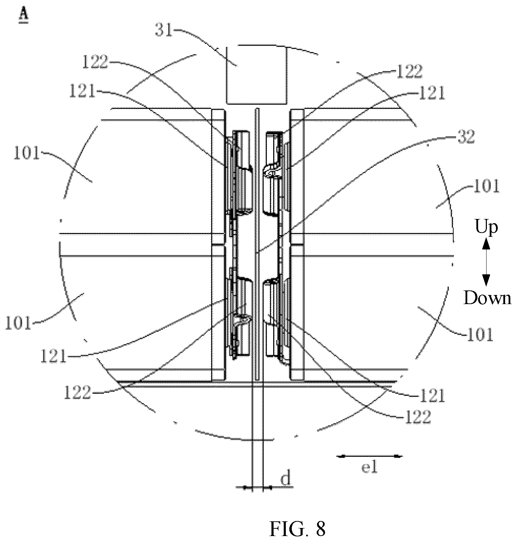

In some embodiments, referring to FIG. 8, a minimum thickness of the insulation adhesive 31 is d, a maximum voltage difference between two adjacent battery groups 10 in the first direction is U, a resistance of the insulation adhesive 31 is R, and a thickness of the insulation adhesive 31 is a dimension of the insulation adhesive 31 in the first direction. The minimum thickness d of the insulation adhesive 31, the maximum voltage difference U between two adjacent battery groups 10 in the first direction, and the resistance R of the insulation adhesive 31 satisfy: U/(R × 0.1 × d) ≤ 44.5.

Understandably, the insulation adhesive 31 is semi-fluid or fluid before the insulation adhesive 31 is cured between two adjacent battery groups 10. The minimum thickness of the insulation adhesive 31 depends on the minimum distance between the electrical connection structures 12 of two adjacent battery groups 10 in the first direction (referring to FIG. 8). The minimum distance between the electrical connection structures 12 of the two adjacent battery groups 10 in the first direction is the minimum thickness d of the insulation adhesive 31.

In setting the minimum thickness of the insulation adhesive 31, with reference to the maximum voltage difference between the battery groups 10 and the resistance of the insulation adhesive 31, the thickness of the insulation adhesive 31 may be set to a value that reduces the thickness of the insulation adhesive 31 but is enough for safety protection. Another approach is to set the distance between battery groups 10 reasonably to make the overall structure of the battery 100 compact and save the consumed material of the insulation adhesive 31 while implementing safety protection. Once the maximum voltage difference between two adjacent battery groups 10 and the material of the insulation adhesive 31 are determined, the minimum distance between the electrical connection structures 12 of the two adjacent battery groups 10 in the first direction is also determined, thereby avoiding the problem that an excessively large potting thickness (that is, an excessively large thickness of the insulation adhesive 31) and an excessively large distance between the adjacent battery groups 10 lead to space waste, a decrease in the volume utilization rate, and waste of the potting adhesive.

Table 1 below shows that when the maximum voltage difference U between two adjacent battery groups 10 in the first direction, the resistance R of the insulation adhesive 31, and the minimum thickness d of the insulation adhesive 31 are different values, the calculated values of U/(R × 0.1 × d) are not greater than 44.5, satisfying the insulative protection requirements.

**Table 1**

| U/V | R/MΩ | d/mm | U/(R × 0.1 × d) |
|---|---|---|---|
| 400 | 100 | 1.7 | 23.5 |
| 890 | 100 | 2 | 44.5 |
| 1500 | 100 | 3.4 | 44.1 |
| 2200 | 100 | 5.2 | 42.3 |
| 3000 | 100 | 7.4 | 40.5 |

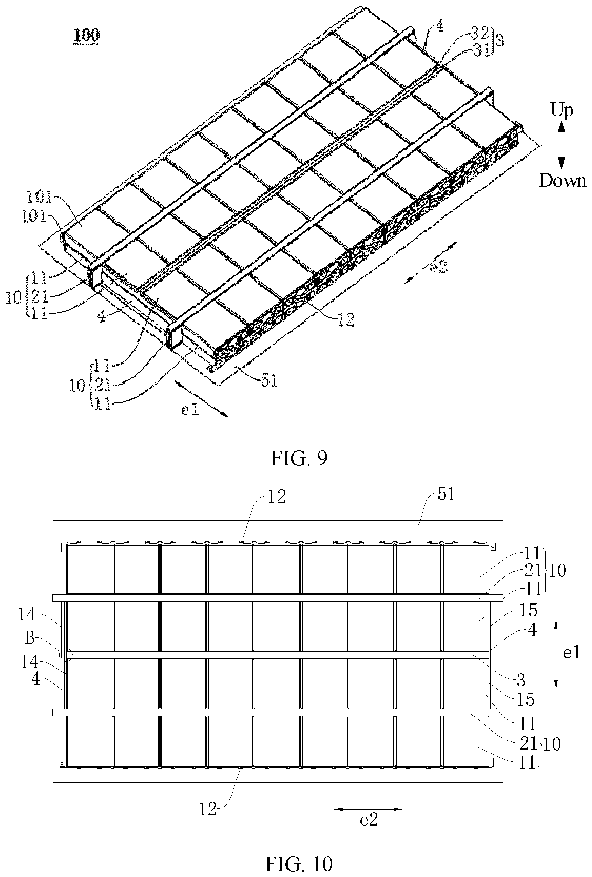

In some embodiments, referring to FIG. 9 to FIG. 10, the battery 100 includes an adhesive blocking structure 4. The adhesive blocking structure 4 is disposed on two opposite sides of the insulation adhesive 31 along the second direction.

Understandably, a potting space is defined between two adjacent battery groups 10. The potting space is open on two opposite sides in the second direction. If the adhesive blocking structure 4 is not provided, in a process of filling the potting space with adhesive to form an insulation adhesive 31, the insulation adhesive 31, before being cured, is prone to flow out from the two opposite sides of the potting space along the second direction and interfere with other structures.

Because the adhesive blocking structure 4 is provided and the adhesive blocking structure 4 is located on two opposite sides of the potting space along the second direction, the adhesive blocking structure can block the two opposite sides of the potting space along the second direction. When the insulation adhesive 31 fills potting space between the two adjacent battery groups 10 by potting, the uncured insulation adhesive 31 can be prevented from flowing out from between the two adjacent battery groups 10. After the insulation adhesive 31 is cured, the insulation adhesive 31 solidifies in the potting space.

In some embodiments, referring to FIG. 10, two opposite side faces of the battery row 11 in the two adjacent battery groups 10 along the second direction are a first side face 14 and a second side face 15 respectively. One of the adhesive blocking structures 4 abuts or is connected to the first side face 14, and the other adhesive blocking structure 4 abuts or is connected to the second side face 15.

"The two opposite side faces of the battery row 11 in the two adj acent battery groups 10 along the second direction are a first side face 14 and a second side face 15 respectively" may be exemplarily explained as follows: for example, among a plurality of battery cells 101 in a battery row 11, two battery cells 101 located at two opposite ends of the battery row 11 along the second direction are a first-end battery cell 101 and a second-end battery cell 101; a side face of the first-end battery cell 101, with the side face oriented away from other battery cells 101 in the battery row 11 in the second direction, is a first side face 14; and, a side face of the second-end battery cell 101, with the side face oriented away from other battery cells 101 in the battery row 11 in the second direction, is a second side face 15.

By abutting or connecting the adhesive blocking structures 4 to the two opposite side faces of the battery row 11 along the second direction, during the pouring of adhesive between the battery groups 10, the uncured insulation adhesive 31 between the battery groups 10 can be better prevented from flowing out from the potting space between the battery groups 10 on both sides along the second direction.

Moreover, one adhesive blocking structure 4 is connected to the first side face 14 and the other adhesive blocking structure 4 is connected to the second side face 15, thereby facilitating the mounting and fixation of the adhesive blocking structures 4. For example, one adhesive blocking structure 4 may be connected to the first side face 14 by double-sided tape 34, and the other adhesive blocking structure 4 may be connected to the second side face 15 by double-sided tape 34.

In some embodiments, referring to FIG. 10 to FIG. 13, the battery 100 may include a box. The box body may include a bottom plate 51. The adhesive blocking structure 4 may include an adhesive blocking portion 42 and a support portion 41. The support portion 41 is disposed on the bottom face of the adhesive blocking portion 42. The adhesive blocking portion 42 abuts or is connected to the first side face 14 or the second side face 15.

The support portion 41 is adapted to support the bottom plate 51 of the battery 100. The support portion 41 abuts or is connect to the bottom plate 51 of the battery 100. For example, the adhesive blocking structure 4 is roughly flat plate-shaped and perpendicular to the bottom plate 51 of the battery 100.

"The adhesive blocking portion 42 abuts or is connected to the first side face 14 or the second side face 15" means that the adhesive blocking portion 42 of the adhesive blocking structure 4 abutting or connected to the first side face 14 abuts or is connected to the first side face 14, and the adhesive blocking portion 42 of the adhesive blocking structure 4 abutting or connected to the second side face 15 abuts or is connected to the second side face 15.

The adhesive blocking structure 4 is supported against the bottom plate 51 of the battery 100 by the support portion 41, thereby improving the stability of the adhesive blocking structure 4.

In some embodiments, a horizontal cross-sectional area of the support portion 41 of the adhesive blocking structure 4 is larger than a horizontal cross-sectional area of the adhesive blocking portion 42. The horizontal cross-sectional area of the support portion 41 means an area of a cross-section obtained by a horizontal plane intersecting the support portion 41. The horizontal cross-sectional area of the adhesive blocking portion 42 means an area of a cross-section obtained by a horizontal plane intersecting the adhesive blocking portion 42.

The relatively large cross-sectional area of the bottom of the adhesive blocking structure 4 (that is, the relatively large horizontal cross-sectional area of the support portion 41) can increase the contact area between the adhesive blocking structure 4 and the bottom plate 51 of the battery 100, thereby improving the stability of the adhesive blocking structure 4 and preventing the adhesive blocking structure 4 from tilting under the impact of uncured insulation adhesive 31 in a process of pouring adhesive between the battery groups 10, where the tilting impairs the adhesive blocking effect.

In some embodiments, referring to FIG. 9 to FIG. 13, the insulation structure 3 includes the insulation adhesive 31, and the insulation structure 3 further includes an insulation plate 32. An outer surface of the insulation plate 32 is coated with the insulation adhesive 31.

In the first direction, the insulation plate 32 may be located in the middle of the insulation adhesive 31, so that the overall structural strength of the insulation structure 3 is relatively high.

Optionally, the insulation plate 32 may be a mica board. The mica board is of high insulation performance and high structural strength, thereby achieving a high level of the overall insulation performance and structural strength of the insulation structure 3.

On the basis of disposing the insulation adhesive 31 between the battery groups 10, an insulation plate 32 is disposed. Because the insulation adhesive 31 overlays the outer surface of the insulation plate 32, the insulation plate 32 and the insulation adhesive 31 form an integral insulation structure 3. The insulation plate 32 can serve as a framework structure of the insulation adhesive 31, thereby increasing the structural strength of the insulation structure 3 between the battery groups 10, and in turn, improving the overall structural strength of the battery 100. The insulation plate 32 and the insulation adhesive 31 coordinate with each other to achieve a function of double insulative protection, thereby further improving the insulative protection effect.

In some embodiments, referring to FIG. 9 to FIG. 13, in an embodiment in which the insulation structure 3 includes an insulation adhesive 31 and an insulation plate 32, the insulation plate 32 in the insulation structure 3 may extend along the second direction. At least a part of the insulation adhesive 31 is located on two opposite sides of the insulation plate 32 along the first direction.

"At least a part of the insulation adhesive 31 is located on two opposite sides of the insulation plate 32 along the first direction" means that a part of the insulation adhesive 31 may be located on two opposite sides of the insulation plate 32 along the first direction, and the remaining part of the insulation adhesive 31 is located on the other side of the insulation plate 32; or, the insulation adhesive 31 is located on two opposite sides of the insulation plate 32 along the first direction.

The part of the insulation adhesive 31, located on the two opposite sides of the insulation plate 32 along the first direction, is applied as a filler between the insulation plate 32 and the battery group 10. In addition, the insulation plate 32 is designed to extend along the arrangement direction of the plurality of battery cells 101 in a battery row 11, so that the plurality of oppositely disposed battery cells 101 are effectively insulated from each other by the insulation adhesive 31 and the insulation plate 32.

In some embodiments, referring to FIG. 10 to FIG. 13, in an embodiment in which the insulation structure 3 includes an insulation adhesive 31 and an insulation plate 32, the two opposite end faces of the insulation plate 32 along the second direction protrude beyond the two opposite end faces of the insulation adhesive 31 along the second direction respectively.

"The two opposite end faces of the insulation plate 32 along the second direction protrude beyond the two opposite end faces of the insulation adhesive 31 along the second direction respectively" may be exemplarily explained as follows: for example, the two opposite end faces of the insulation plate 32 along the second direction are a first insulation end face and a second insulation end face respectively; the two opposite end faces of the insulation adhesive 31 along the second direction are a third insulation end face and a fourth insulation end face respectively; the first insulation end face and the third insulation end face are located on the same side, and the first insulation end face protrudes beyond the third insulation end face; and the second insulation end face and the fourth insulation end face are located on the same side, and the second insulation end face protrudes beyond the fourth insulation end face.

In this way, in the arrangement direction of the plurality of battery cells 101 in the battery row 11, the insulation plate 32 can penetrate the insulation adhesive 31, so that the structural strength of each part of the insulation structure 3 is increased, thereby making the overall structural strength of the insulation structure 3 relatively uniform, and improving the overall insulative protection effect.

In some embodiments, referring to FIG. 9 to FIG. 13, in an embodiment in which the insulation structure 3 includes an insulation adhesive 31 and an insulation plate 32, the insulation plate 32 may extend along a straight line, a curve, or a polygonal line in the second direction.

The insulation plate 32 extending along a straight line is simple in structure and is easy to process and take shape. The insulation plate 32 extending along a curve or a polygonal line is of higher structural strength, thereby making the overall structural strength of the insulation structure 3 higher.

In some embodiments in which the insulation structure 3 includes an insulation adhesive 31 and an insulation plate 32, the extension route of the insulation plate 32 in the second direction may be a combination of at least two of a straight line, a curve, or a polygonal line, so that the structure of the insulation plate 32 is more diversified.

In some embodiments in which the insulation structure 3 includes an insulation adhesive 31 and an insulation plate 32, the insulation plate 32 in the insulation structure 3 extends along the second direction. At least a part of the insulation adhesive 31 is located on two opposite sides of the insulation plate 32 along the first direction. A through-hole (not shown in the drawings) is formed on the insulation plate 32. The through-hole communicates, and is located in a space between, the two opposite sides of the insulation plate 32 along the first direction.

Understandably, the potting space between the two adjacent battery groups 10 is partitioned by the insulation plate 32 into two parts of the space located on the two opposite sides of the insulation plate 32 along the first direction. In a process of forming the insulation adhesive 31 between the battery groups 10 by potting, the insulation adhesive 31 located on the two opposite sides of the insulation plate 32 along the first direction can flow toward each other through the through-hole on the insulation plate 32, so that the insulation adhesive 31 located on the two opposite sides of the insulation plate 32 along the first direction is more uniform, thereby ensuring the uniformity of the potting, and making the cured insulation adhesive 31 uniform on the whole, and ensuring a good overall insulative protection effect of the insulation adhesive 31.

In some embodiments, a plurality of through-holes may be provided on the insulation plate 32. The plurality of through-holes may be spaced apart along an extension direction of the insulation plate 32.

The through-holes on the insulation plate 32 are plural, and are spaced apart along the extension direction of the insulation plate 32, so that the insulation adhesive 31 located on the two opposite sides of the insulation plate 32 along the first direction can be further made to flow toward each other through the plurality of through-holes on the insulation plate 32. In this way, the insulation adhesive 31 on the two opposite sides of the insulation plate 32 along the first direction can be uniformized everywhere along the second direction. Therefore, the insulation adhesive 31 between the battery groups 10 can be uniformized in every part during the potting, so that the overall structure of the cured insulation adhesive 31 is uniform, and the overall insulative protection effect is stronger.

In some other embodiments in which the insulation structure 3 includes an insulation adhesive 31 and an insulation plate 32, the insulation plate 32 in the insulation structure 3 may include a plurality of insulation sub-plates 32 (not shown in the drawings) spaced apart along the second direction. At least a part of the insulation adhesive 31 fills the clearance between two adjacent insulation sub-plates 32.

"At least a part of the insulation adhesive 31 fills the clearance between two adjacent insulation sub-plates 32" means: (i) a part of the insulation adhesive 31 fills the clearance between two adjacent insulation sub-plates 32, and the remaining part of the insulation adhesive 31 fills the clearance between the insulation sub-plate 32 and the battery group 10; for example, when there is a clearance between the either side of the insulation sub-plate 32 along the first direction and the battery cells 101 in the two adjacent battery groups 10, a part of the insulation adhesive 31 fills the clearance between the two adjacent insulation sub-plates 32, and the remaining part of the insulation adhesive 31 fills the clearance between each of the two opposite sides of the insulation sub-plate 32 along the first direction and the battery group 10; or (ii) all the insulation adhesive 31 fills the clearance between two adjacent insulation sub-plates 32; for example, when the two sides of the insulation sub-plate 32 along the first direction abuts or is connected to the battery cells 101 in the two adjacent battery groups 10, all the insulation adhesive 31 fills the clearance between the two adjacent insulation sub-plates 32.

The plurality of insulation sub-plates 32 are spaced apart along the extension direction of the insulation adhesive 31, so that each part of the insulation adhesive 31 in the length direction can be supported by the insulation sub-plates 32. In this way, the overall structural strength of the insulation structure 3 is uniform and high, and the overall insulative protection effect is stronger.

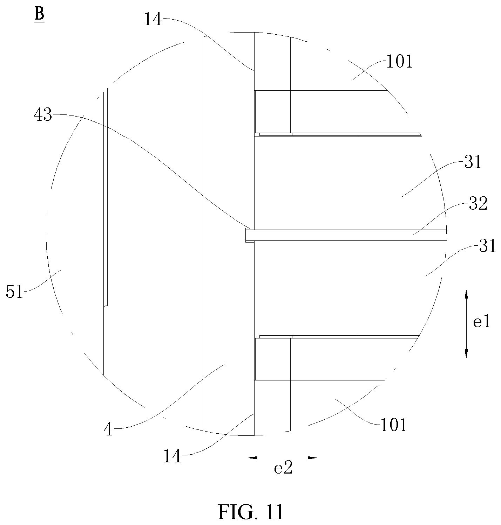

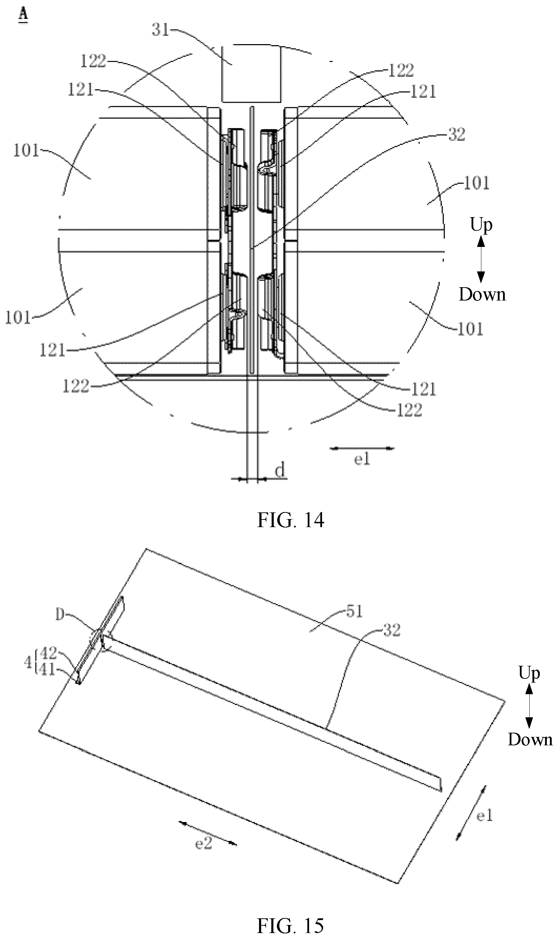

In some embodiments, referring to FIG. 11 to FIG. 16, in an embodiment in which the insulation structure 3 includes an insulation adhesive 31 and an insulation plate 32, the insulation plate 32 may be positioned between two adjacent battery groups 10 by a positioning structure 43.

Understandably, before the insulation adhesive 31 is formed between the adjacent battery groups 10 by potting, the insulation plate 32 may be positioned between the two adjacent battery groups 10 by a positioning structure 43. In this way, during the potting, the insulation plate 32 can remain stable at a preset position without displacement or tilting, so that the insulation structure 3 formed by the cured insulation adhesive 31 and the insulation plate 32 can produce the designed structure. In addition, the insulation adhesive 31 can also play a role in further fixing the insulation plate 32.

In some embodiments, referring to FIG. 11 to FIG. 16, the positioning structure 43 may include a positioning groove. A part of the insulation plate 32 is inserted into the positioning groove. For example, an end portion of the insulation plate 32 is inserted into the positioning groove. By inserting a part of the insulation plate 32 into the positioning groove, the insulation plate 32 can be positioned conveniently. The positioning structure 43 is simple and easy to process and take shape.

In some embodiments, referring to FIG. 11 to FIG. 16, in an embodiment in which the insulation structure 3 includes an insulation adhesive 31 and an insulation plate 32, the battery 100 further includes an adhesive blocking structure 4. The adhesive blocking structure 4 is disposed on two opposite sides of the insulation adhesive 31 along the second direction. The insulation plate 32 extends along the second direction. At least a part of the insulation adhesive 31 is located on two opposite sides of the insulation plate 32 along the first direction. The positioning structure 43 is disposed on one side of the adhesive blocking structure 4, the side being oriented toward the insulation adhesive 31.

In a process of disposing an insulation structure 3 between adjacent battery groups 10, the insulation plate 32 may be first positioned between two adjacent battery groups 10 through the positioning structure 43 on the adhesive blocking structure 4, and then the insulation adhesive is poured into a potting space between the two adjacent battery groups 10.

Due to the adhesive blocking structure 4 disposed, when the insulation adhesive 31 is poured as a filler between two adjacent battery groups 10 by potting, uncured insulation adhesive 31 can be prevented from flowing out from between the two adjacent battery groups 10. In addition, the positioning structure 43 is disposed on the adhesive blocking structure 4, so that the positioning structure 43 and the adhesive blocking structure 4 are integrated into a whole, thereby simplifying the number of components. Moreover, the two ends of the insulation plate 32 are positioned by the positioning structure 43 on the adhesive blocking structure 4, so that the insulation plate 32 is positioned reliably and conveniently.

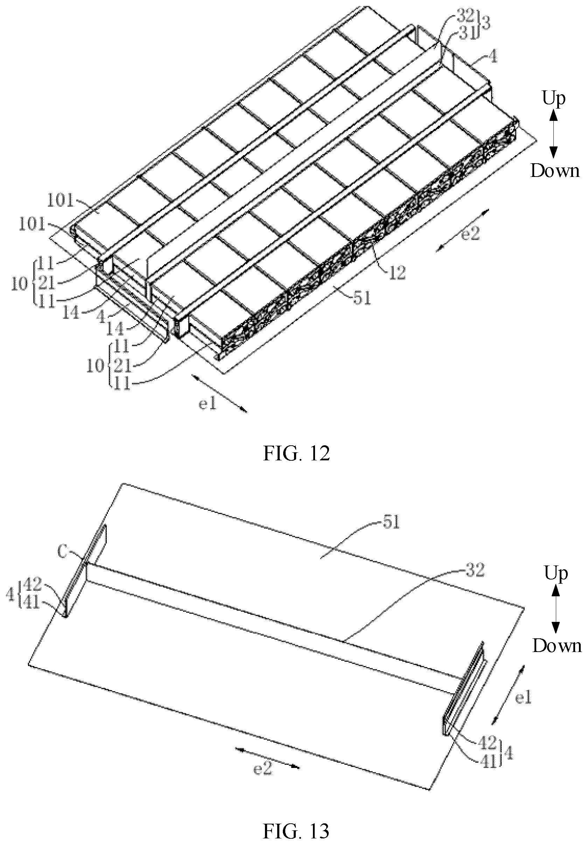

In some embodiments, referring to FIG. 13 to FIG. 16, the positioning structure 43 disposed on the adhesive blocking structure 4 is formed as a positioning groove extending along a vertical direction. Two opposite ends of the insulation plate 32 along the second direction are inserted into the positioning grooves respectively, where the positioning grooves are located on the adhesive blocking structures 4 on two opposite sides of the potting space along the second direction.

The positioning structure 43 disposed on the adhesive blocking structure 4 is formed as a positioning groove extending along the vertical direction, thereby increasing the area of a fit between the insulation plate 32 and the positioning structure 43, and improving the stability of positioning the insulation plate 32.

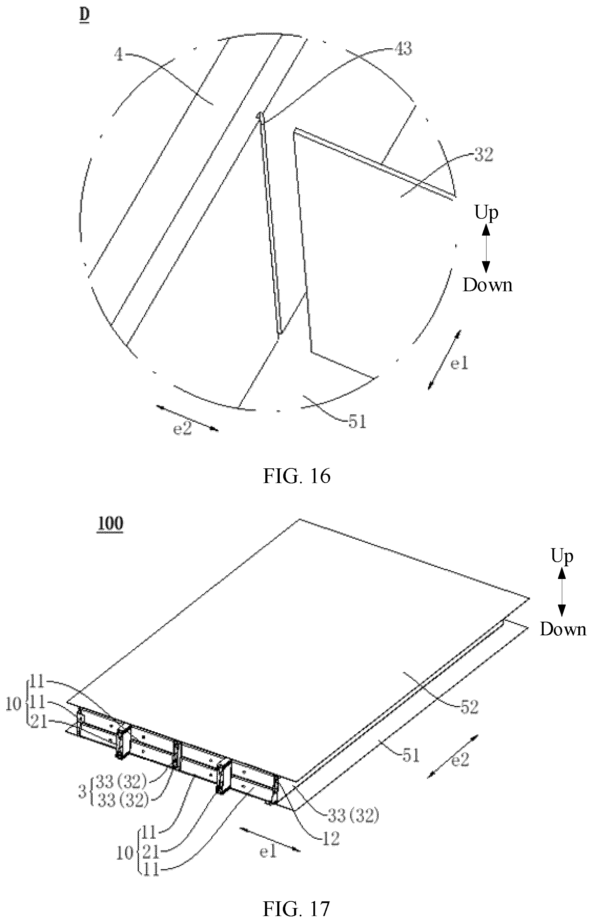

In some embodiments, referring to FIG. 17 to FIG. 19, the insulation structure 3 includes an insulation plate 32. The insulation plate 32 is formed as an insulating protection cover 33. The insulating protection cover 33 overlays the electrical connection structure 12 of at least one of two adjacent battery groups 10.

"The insulating protection cover 33 overlays the electrical connection structure 12 of at least one of two adjacent battery groups 10" may be exemplarily explained as follows: (i) for example, one insulating protection cover 33 is disposed between two adjacent battery groups 10, and the insulating protection cover 33 overlays the electrical connection structure 12 of one of the two adjacent battery groups 10; or (ii) two insulating protection covers 33 are disposed between two adjacent battery groups 10, and the two insulating protection covers 33 overlay the electrical connection structures 12 in the two adjacent battery groups 10 respectively.

The insulation plate 32 is shaped in the form of an insulating protection cover 33, and overlays the electrical connection structure 12 of at least one of the two adjacent battery groups 10, thereby dielectrically isolating the electrical connection structures 12 of the two adjacent battery groups 10 conveniently and effectively.

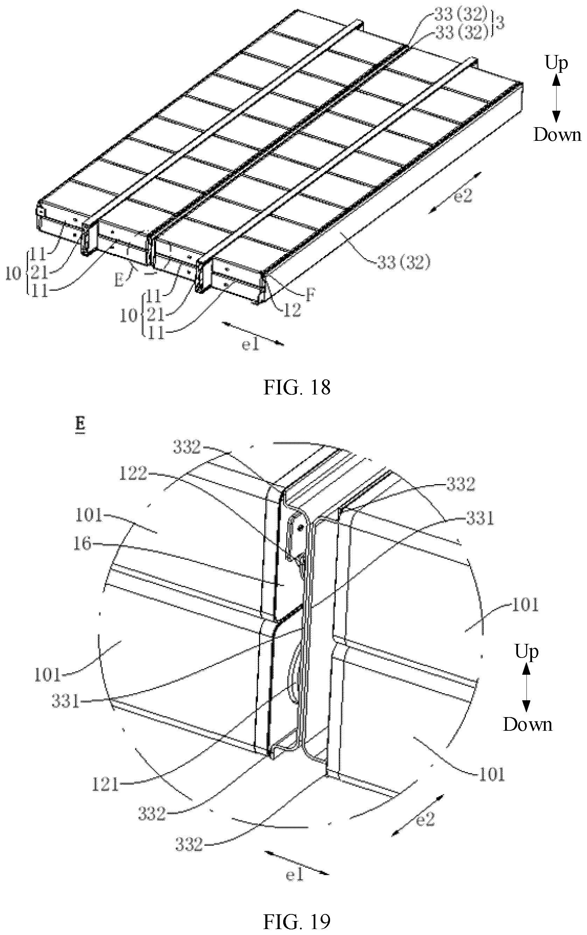

In some embodiments, referring to FIG. 19 to FIG. 20, the insulating protection cover 33 includes a cover body 331 and a connecting flange 332. The cover body 331 overlays the electrical connection structure 12 of at least one of the two adj acent battery groups 10. The connecting flange 332 of the insulating protection cover 33 is connected to an outer edge of the cover body 331. The connecting flange 332 is connected to an outer wall surface of the battery row 11.

"The cover body 331 overlays the electrical connection structure 12 of at least one of two adjacent battery groups 10" includes the following scenarios: (i) when one insulating protection cover 33 is disposed between two adjacent battery groups 10, the cover body 331 of the insulating protection cover 33 overlays the electrical connection structure 12 of one of the two adjacent battery groups 10; or (ii) when two insulating protection covers 33 are disposed between two adjacent battery groups 10, the cover bodies 331 of the two insulating protection covers 33 overlay the electrical connection structures 12 in the two adjacent battery groups 10 respectively.

The outer wall surface of the battery row 11 is the outer wall surface of the battery cell 101. For example, the protection cover may extend along the first direction, and the connecting flange 332 of the protection cover may be connected to the outer wall surfaces of a plurality of battery cells 101 in the battery row 11.

The insulating protection cover 33 is connected to the outer wall surface of the battery row 11 by the provided connecting flange 332, thereby facilitating the mounting and fixation of the insulating protection cover 33.

In some embodiments, surfaces of the two adjacent battery groups 10, the surfaces being oriented toward each other, are battery end faces 16. An inner wall of the cover body 331 is provided with a reinforcing bulge (not shown in the drawings). The reinforcing bulge abuts the corresponding battery end faces 16.

"Surfaces of the two adjacent battery groups 10, the surfaces being oriented toward each other, are battery end faces 16" may be exemplarily explained as follows: for example, among the two adjacent battery groups 10, one is a first battery group 10, and the other is a second battery group 10; a battery cell 101 in a battery row 11 adjacent to the second battery group 10 in the first battery group 10 is a first battery cell 101, and a battery cell 101 in a battery row 11 adjacent to the first battery group 10 in the second battery group 10 is a second battery cell 101; and the first battery cell 101 and the second battery cell 101 of the two adjacent battery groups 10 are disposed opposite to each other and spaced apart. The end face of the first battery cell 101 in the first battery group 10, the end face being oriented toward the second battery group 10, is a battery end face 16; and, the end face of the second battery cell 101 in the second battery group 10, the end face being oriented toward the first battery group 10, is a battery end face 16.

By disposing the reinforcing bulge on the inner wall of the cover body 331 and letting the reinforcing bulge abut the battery end faces 16, the structural strength of the insulating protection cover 33 can be increased, and the stability of the overall structure can be improved.

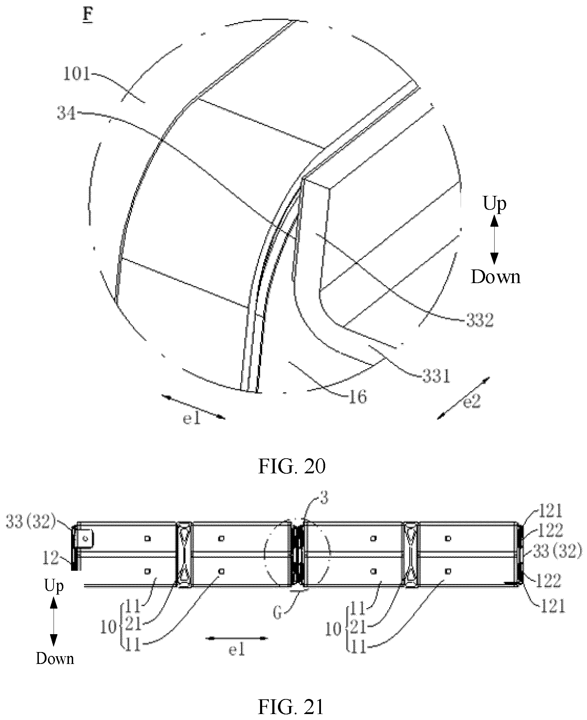

In some embodiments, referring to FIG. 20, the insulating protection cover 33 is connected to an outer wall surface of the battery row 11 by double-sided tape 34. The insulating protection cover 33 is connected and fixed to the outer wall surface of the battery row 11 by the double-sided tape 34, so that the mounting and fixation of the insulating protection cover 33 are convenient, simple, and easy to operate.

In some embodiments, referring to FIG. 19 to FIG. 22, surfaces of the two adjacent battery groups 10, the surfaces being oriented toward each other, are battery end faces 16. The insulating protection cover 33 is connected to the battery end faces 16.

Connecting the insulating protection cover 33 to a less expansible surface of the battery cell 101 can avoid or reduce severe deformation of the insulating protection cover 33 caused by the expansion of the battery cell 101, thereby ensuring that the junction between the insulating protection cover 33 and the battery cell 101 remains stable and ensuring a long service life of the insulating protection cover 33.

In some embodiments, the insulating protection cover 33 is an elastomer that is elastically deformable. For example, the insulating protection cover 33 may be a silicone piece or a rubber piece.

When the battery cell 101 expands, the insulating protection cover 33 can deform along with the battery cell 101 because the insulating protection cover 33 itself is elastically deformable, so that the insulating protection cover 33 can adapt to the expansion of the battery cell 101, thereby ensuring that the junction between the insulating protection cover 33 and the battery cell 101 remains stable and ensuring a long service life of the insulating protection cover 33.

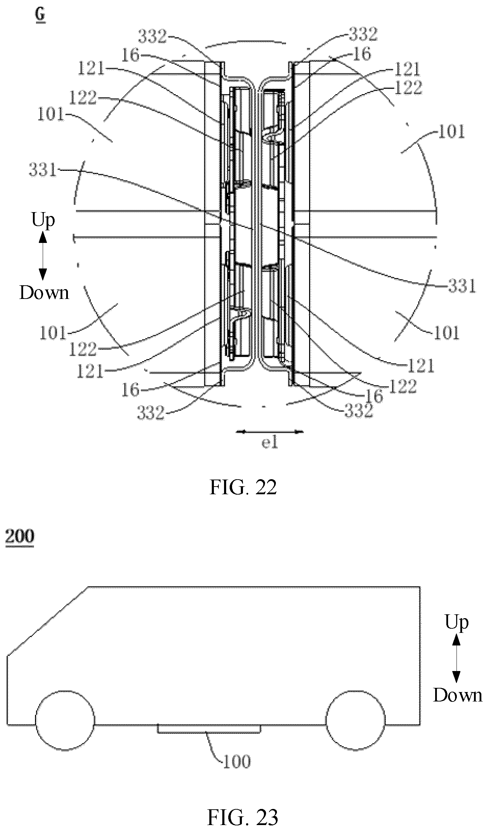

In some embodiments, referring to FIG. 22, two insulating protection covers 33 are disposed between the two adjacent battery groups 10. The two insulating protection covers 33 overlay the electrical connection structures 12 of the two adjacent battery groups 10 respectively. In this way, an insulating protection cover 33 is disposed on the electrical connection structure 12 of each battery group 10, so that the two adjacent battery groups 10 are dielectrically isolated by the two insulating protection covers 33 to achieve a stronger insulative protection effect.

In some embodiments, referring to FIG. 22, the two insulating protection covers 33 between the two adjacent battery groups 10 are spaced apart in the first direction. In this way, when the battery cell 101 expands, because a clearance is left between the two insulating protection covers 33 between the two adjacent battery groups 10, even if the insulating protection covers 33 are deformed when the battery cell 101 expands, a deformation space is left for the insulating protection covers 33, thereby preventing the two insulating protection covers 33 between the two adjacent battery groups 10 from squeezing each other due to deformation, and in turn, ensuring a long service life of the insulating protection covers 33.

Referring to FIG. 23, an embodiment of this application further provides an electrical device 200. The electrical device includes the battery 100 disclosed above. The battery 100 is configured to provide electrical energy for the electrical device 200. Therefore, by employing the battery 100, the safety and reliability of the electrical device 200 in use are improved.

Optionally, as shown in FIG. 23, when the battery 100 is applied to a vehicle, the battery 100 may be disposed at the bottom, front, or rear of the vehicle. The battery 100 may be configured to supply power to the vehicle. For example, the battery 100 may serve as an operating power supply of the vehicle. The vehicle may further include a controller and a motor. The controller is configured to control the battery 100 to supply power to the motor, for example, to meet electrical energy requirements in starting, navigating, or running the vehicle.

In some specific embodiments of this application, referring to FIG. 3 to FIG. 8, the battery 100 includes a plurality of battery groups 10. The plurality of battery groups 10 are arranged along a first direction. The battery group 10 includes two battery rows 11 arranged along the first direction. Each battery row 11 includes a plurality of battery cells 101 arranged along the second direction. The electrical connection structures 12 of the two battery rows 11 in the battery group 10 are oriented away from each other, and the pressure relief structures 13 of the two battery rows 11 in the battery group 10 are oriented toward each other. A protection beam 21 extending along the second direction is disposed between the two battery rows 11 in the battery group 10. At least a part of the protection beam 21 is located between the pressure relief structures 13 of the two battery rows 11 in the same battery group 10.

Two adjacent battery groups 10 in the first direction are disposed opposite to each other and spaced apart. An electrical connection structure 12 is disposed on one side of each of two adjacent battery groups 10 in the first direction, where the one side of one of the two adjacent battery groups is oriented toward the one side of other battery group. The electrical connection structure 12 includes an electrode post 121 and a connecting strap 122. An insulation structure 3 is disposed between two adjacent battery groups 10 in the first direction. A part of the insulation structure 3 is located between the electrical connection structures 12 of the two adjacent battery groups 10, and the remaining part of the insulation structure 3 is located between the battery end faces 16 of the two adjacent battery groups 10.

The insulation structure 3 includes an insulation adhesive 31 and an insulation plate 32. The insulation plate 32 extends in a second direction, and extends linearly in the second direction. The insulation plate is in a flat plate shape. The insulation adhesive 31 overlays the outer surface of the insulation plate 32. The insulation adhesive 31 is applied to two opposite sides of the insulation plate 32 along the second direction, and the insulation adhesive 31 fills the clearance between the insulation plate 32 and the battery group 10. The insulation adhesive 31 completely overlays the electrical connection structure 21 of the battery group 10, and overlays the battery end face 16 of the battery group 10 at the same time.

By disposing the insulation structure 3 between adjacent battery groups 10 and making the insulation structure 3 include an insulation adhesive 31 and an insulation plate 32, this application implements double insulative protection, solves the high-voltage sparking problem effectively, and improves the safety of the battery 100 in use.

In some other specific embodiments of this application, referring to FIG. 9 to FIG. 16, the battery 100 includes a plurality of battery groups 10. The plurality of battery groups 10 are arranged along a first direction. The battery group 10 includes two battery rows 11 arranged along the first direction. Each battery row 11 includes a plurality of battery cells 101 arranged along the second direction. The electrical connection structures 12 of the two battery rows 11 in the battery group 10 are oriented away from each other, and the pressure relief structures 13 of the two battery rows 11 in the battery group 10 are oriented toward each other. A protection beam 21 extending along the second direction is disposed between the two battery rows 11 in the battery group 10. At least a part of the protection beam 21 is located between the pressure relief structures 13 of the two battery rows 11 in the same battery group 10.

Two adjacent battery groups 10 in the first direction are disposed opposite to each other and spaced apart. An electrical connection structure 12 is disposed on one side of each of two adjacent battery groups 10 in the first direction, where the one side of one of the two adjacent battery groups is oriented toward the one side of other battery group. The electrical connection structure 12 includes an electrode post 121 and a connecting strap 122. An insulation structure 3 is disposed between two adjacent battery groups 10 in the first direction. A part of the insulation structure 3 is located between the electrical connection structures 12 of the two adjacent battery groups 10, and the remaining part of the insulation structure 3 is located between the battery end faces 16 of the two adjacent battery groups 10.

The insulation structure 3 includes an insulation adhesive 31 and an insulation plate 32. The insulation plate 32 extends in a second direction, and extends linearly in the second direction. The insulation plate is in a flat plate shape. The insulation adhesive 31 overlays the outer surface of the insulation plate 32. The insulation adhesive 31 is applied to two opposite sides of the insulation plate 32 along the second direction, and the insulation adhesive 31 fills the clearance between the insulation plate 32 and the battery group 10. The insulation adhesive 31 completely overlays the electrical connection structure 21 of the battery group 10, and overlays the battery end face 16 of the battery group 10 at the same time.

An adhesive blocking structure 4 is disposed on two opposite sides of the insulation adhesive 31 along the second direction separately. A positioning structure 43 is disposed on one side of the adhesive blocking structure 4, the side being oriented toward the insulation adhesive 31. The positioning structure 43 is formed as a positioning groove extending along a vertical direction. Two opposite ends of the insulation plate 32 along the second direction are inserted into the positioning grooves respectively, where the positioning grooves are located on the adhesive blocking structures 4 on two opposite sides of the potting space along the second direction.

By disposing the insulation structure 3 between adjacent battery groups 10 and making the insulation structure 3 include an insulation adhesive 31 and an insulation plate 32, this application implements double insulative protection, solves the high-voltage sparking problem effectively, and improves the safety of the battery 100 in use. In addition, the adhesive blocking structure 4 disposed can prevent uncured insulation adhesive 31 from flowing out from between adjacent battery groups 10 during potting.

In still some other specific embodiments of this application, referring to FIG. 17 to FIG. 22, the battery 100 includes a plurality of battery groups 10. The plurality of battery groups 10 are arranged along a first direction. The battery group 10 includes two battery rows 11 arranged along the first direction. Each battery row 11 includes a plurality of battery cells 101 arranged along the second direction. The electrical connection structures 12 of the two battery rows 11 in the battery group 10 are oriented away from each other, and the pressure relief structures 13 of the two battery rows 11 in the battery group 10 are oriented toward each other. A protection beam 21 extending along the second direction is disposed between the two battery rows 11 in the battery group 10. At least a part of the protection beam 21 is located between the pressure relief structures 13 of the two battery rows 11 in the same battery group 10.

Two adjacent battery groups 10 in the first direction are disposed opposite to each other and spaced apart. An electrical connection structure 12 is disposed on one side of each of two adjacent battery groups 10 in the first direction, where the one side of one of the two adjacent battery groups is oriented toward the one side of other battery group. The electrical connection structure 12 includes an electrode post 121 and a connecting strap 122. An insulation structure 3 is disposed between two adjacent battery groups 10 in the first direction. A part of the insulation structure 3 is located between the electrical connection structures 12 of the two adjacent battery groups 10, and the remaining part of the insulation structure 3 is located between the battery end faces 16 of the two adjacent battery groups 10.

The insulation structure 3 includes an insulation plate 32. The insulation plate 32 is formed as an insulating protection cover 33. Two insulating protection covers 33 are disposed between the two adjacent battery groups 10. The two insulating protection covers 33 overlay the electrical connection structures 12 of the two adjacent battery groups 10 respectively. Each insulating protection cover 33 extends along the second direction. The insulating protection cover 33 completely covers the electrical connection structure 12 of the corresponding battery group 10, the electrical connection structure being oriented toward the insulating protection cover 33. The two insulating protection covers 33 between the two adjacent battery groups 10 are spaced apart in the first direction. Each insulating protection cover 33 includes a cover body 331 and a connecting flange 332. The cover body 331 overlays the electrical connection structure 12 of the corresponding battery group 10. The connecting flange 332 is disposed on the upper side and the lower side of the cover body 331. The connecting flange 332 is connected to the battery end face 16 by double-sided tape 34, so as to connect and fix the insulating protection cover 33 to the corresponding battery group 10.

By disposing the insulation structure 3 between adjacent battery groups 10 and making the insulation structure 3 include two insulating protection covers 33, this application implements double insulative protection, solves the high-voltage sparking problem effectively, and improves the safety of the battery 100 in use.

In the description of this specification, reference to the terms "one embodiment", "some embodiments", "illustrative embodiment", "example", "specific example", "some examples", and the like means that a particular feature, structure, material, or characteristic described in connection with the embodiment or example is included in at least one embodiment or example of this application. In this embodiment, an illustrative expression of such terms do not necessarily refer to an identical embodiment or example. In addition, the particular features, structures, materials, or characteristics may be combined in one or more embodiments in any appropriate manner.

Although some embodiments of this application are shown and described above, a person of ordinary skill in the art understands that variations, modifications, substitutions, and derivations may be made to the embodiments without departing from the principles and essence of this application. The scope of this application is subject to the claims and equivalents thereof.

## Claims

1. A battery, comprising:
a plurality of battery cells, at least two of the battery cells are disposed opposite to each other, and at least one electrode post of the two oppositely disposed battery cells is located on one side of each of the two battery cells, wherein the one side of one battery cell is oriented toward the one side of the other battery cell; an insulation structure is disposed between the two oppositely disposed battery cells, and at least a part of the insulation structure is located between the electrode posts of the two battery cells, the electrode posts being oriented toward each other.

2. The battery according to claim 1, wherein each of the battery cells is provided with a pressure relief structure, and the pressure relief structure and the electrode post are located on different sides of the battery cell.

3. The battery according to claim 2, wherein the electrode posts of the battery cell are all located on a same side, and the pressure relief structure and the electrode posts are located on two opposite sides of the battery cell.

4. The battery according to any one of claims 1 to 3, wherein the insulation structure comprises at least one of an insulation adhesive, an insulation plate, or an insulation film.

5. The battery according to any one of claims 1 to 4, wherein the battery comprises a plurality of battery groups, the plurality of battery groups are arranged along a first direction, each of the battery groups comprises at least one battery row, the battery row comprises a plurality of battery cells arranged along a second direction, and the second direction is perpendicular to the first direction.

6. The battery according to claim 5, wherein two adjacent battery groups in the first direction are disposed opposite to each other and spaced apart, and an electrical connection structure is disposed on one side of each of at least a part of two adjacent battery groups in the first direction, wherein the one side of one of the two adjacent battery groups is oriented toward the one side of other battery group; the electrical connection structure comprises the electrode post; the insulation structure is disposed between the two adjacent battery groups provided with the electrical connection structures on opposite sides in the first direction; and at least a part of the insulation structure is located between the electrical connection structures of the two adjacent battery groups.

7. The battery according to claim 6, wherein the insulation structure comprises an insulation adhesive.

8. The battery according to claim 7, wherein the insulation adhesive is a thermally conductive insulation adhesive.

9. The battery according to claim 7, wherein a projection of the electrical connection structure on a reference plane lies within a projection of the insulation adhesive on the reference plane, and the reference plane is a plane perpendicular to the first direction.

10. The battery according to claim 7, wherein a projection of the insulation adhesive on a reference plane lies within a projection of the battery row on the reference plane, and the reference plane is a plane perpendicular to the first direction.

11. The battery according to claim 7, wherein a minimum thickness of the insulation adhesive is d, a maximum voltage difference between two adjacent battery groups in the first direction is U, a thickness of the insulation adhesive is a dimension of the insulation adhesive in the first direction, a resistance of the insulation adhesive is R, and the d, U, and R satisfy: U/(R × 0.1 × d) ≤ 44.5.

12. The battery according to any one of claims 7 to 11, wherein the battery comprises an adhesive blocking structure, and the adhesive blocking structure is disposed on two opposite sides of the insulation adhesive along the second direction.

13. The battery according to claim 12, wherein two opposite side faces of the battery row in the two adjacent battery groups along the second direction are a first side face and a second side face respectively, one of the adhesive blocking structures abuts or is connected to the first side face, and the other adhesive blocking structure abuts or is connected to the second side face.

14. The battery according to claim 13, wherein the adhesive blocking structure comprises an adhesive blocking portion and a support portion, the support portion is disposed on a bottom face of the adhesive blocking portion, the support portion is adapted to support a bottom plate of the battery, and the adhesive blocking portion abuts or is connected to the first side face or the second side face.

15. The battery according to claim 14, wherein a horizontal cross-sectional area of the support portion is larger than a horizontal cross-sectional area of the adhesive blocking portion.

16. The battery according to any one of claims 7 to 15, wherein the insulation structure further comprises an insulation plate, and an outer surface of the insulation plate is coated with the insulation adhesive.

17. The battery according to claim 16, wherein the insulation plate extends along the second direction, and at least a part of the insulation adhesive is located on two opposite sides of the insulation plate along the first direction.

18. The battery according to claim 17, wherein two opposite end faces of the insulation plate along the second direction protrude beyond two opposite end faces of the insulation adhesive along the second direction respectively.

19. The battery according to claim 17, wherein the insulation plate extends along a straight line, a curve, or a polygonal line in the second direction.

20. The battery according to claim 17, wherein a through-hole is formed in the insulation plate, and the through-hole communicates, and is located in a space between, two opposite sides of the insulation plate along the first direction.

21. The battery according to claim 20, wherein a plurality of through-holes are provided, and are spaced apart along an extension direction of the insulation plate.

22. The battery according to any one of claims 16 to 21, wherein the insulation plate comprises a plurality of insulation sub-plates spaced apart along the second direction, and at least a part of the insulation adhesive fills a clearance between two adjacent insulation sub-plates.

23. The battery according to claim 16, wherein the insulation plate is positioned between two adjacent battery groups by a positioning structure.

24. The battery according to claim 23, wherein the positioning structure comprises a positioning groove, and a part of the insulation plate is inserted into the positioning groove.

25. The battery according to claim 23, wherein the battery further comprises an adhesive blocking structure, the adhesive blocking structure is disposed on two opposite sides of the insulation adhesive along the second direction, the insulation plate extends along the second direction, at least a part of the insulation adhesive is located on two opposite sides of the insulation plate along the first direction, and the positioning structure is disposed on one side of the adhesive blocking structure, the side being oriented toward the insulation adhesive.

26. The battery according to claim 25, wherein the positioning structure is formed as a positioning groove extending along a vertical direction, and two opposite ends of the insulation plate along the second direction are inserted into the positioning groove separately.

27. The battery according to any one of claims 16 to 26, wherein the insulation plate is a mica board.

28. The battery according to claim 6, wherein the insulation structure comprises an insulation plate, the insulation plate is formed as an insulating protection cover, and the insulating protection cover overlays the electrical connection structure of at least one of two adjacent battery groups.

29. The battery according to claim 28, wherein the insulating protection cover comprises a cover body and a connecting flange, the connecting flange is connected to an outer edge of the cover body, the cover body overlays the electrical connection structure of at least one of the two adjacent battery groups, and the connecting flange is connected to an outer wall surface of the battery row.

30. The battery according to claim 29, wherein surfaces of the two adjacent battery groups, the surfaces being oriented toward each other, are battery end faces, and an inner wall of the cover body is provided with a reinforcing bulge, and the reinforcing bulge abuts the battery end faces.

31. The battery according to claim 28, wherein the insulating protection cover is connected to an outer wall surface of the battery row by double-sided tape.

32. The battery according to claim 28, wherein surfaces of the two adjacent battery groups, the surfaces being oriented toward each other, are battery end faces, and the insulating protection cover is connected to the battery end faces.

33. The battery according to claim 28, wherein the insulating protection cover is an elastomer that is elastically deformable.

34. The battery according to any one of claims 28 to 33, wherein two insulating protection covers are disposed between the two adjacent battery groups, and the two insulating protection covers overlay the electrical connection structures of the two adjacent battery groups respectively.

35. The battery according to claim 34, wherein the two insulating protection covers between the two adjacent battery groups are spaced apart in the first direction.

36. The battery according to any one of claims 6 to 35, wherein the battery group comprises two battery rows arranged along the first direction, the electrical connection structures of the two battery rows in the battery group are oriented away from each other, pressure relief structures of the two battery rows in the battery group are oriented toward each other, a protection beam extending along the second direction is disposed between the two battery rows in the battery group, and at least a part of the protection beam is located between the pressure relief structures of the two battery rows in a same battery group.

37. The battery according to claim 36, wherein the protection beam comprises a heat exchange portion, and the heat exchange portion is configured to exchange heat with the battery cells.

38. An electrical device, wherein the electrical device comprises the battery according to any one of claims 1 to 37, and the battery is configured to provide electrical energy for the electrical device.
